# EUROPÄISCHE PATENTSCHRIFT

(11) **EP 2 938 445 B1**
(45) Veröffentlichungstag und Bekanntmachung des Hinweises auf die Patenterteilung: **03.08.2016**
(21) Anmeldenummer: 13820769.1
(22) Anmeldetag: 20.12.2013
(51) Int. Cl.: B21B 13/06, B21C 47/34, B21B 37/68, B21B 39/14

(54) **VORRICHTUNG UND VERFAHREN ZUM SEITLICHEN FÜHREN EINES WALZ- ODER GIESSERZEUGNISSES AUF EINER TRANSPORTSTRASSE**
DEVICE AND METHOD FOR LATERALLY GUIDING A ROLLED OR CAST PRODUCT ON A TRANSPORT TRACK
DISPOSITIF ET PROCÉDÉ POUR GUIDER LATÉRALEMENT UN PRODUIT LAMINÉ OU COULÉ SUR UNE VOIE DE TRANSPORT

(30) Priorität: 28.12.2012 DE 102012224505
(43) Veröffentlichungstag der Anmeldung: 04.11.2015
(73) Patentinhaber: SMS group GmbH, 40237 Düsseldorf (DE)
(72) Erfinder: SCHILLING, Moritz, 57223 Kreuztal (DE); KIPPING, Matthias, 57562 Herdorf (DE); KUNZE, Volker, 57076 Siegen (DE); SEIDEL, Jürgen, 57223 Kreuztal (DE)
(74) Vertreter: Klüppel, Walter
(86) Internationale Anmeldenummer: PCT/EP2013/077679
(87) Internationale Veröffentlichungsnummer: WO 2014/102189

(56) Entgegenhaltungen:
- WO-A1-02/30587
- WO-A1-2010/149192
- DE-B- 1 045 954
- JP-A- H03 169 419

## Beschreibung

Die Erfindung betrifft eine Vorrichtung zum seitlichen Führen eines Walz- oder Gießerzeugnisses in Form eines Metallbandes, einer Bramme oder dergleichen auf einer Transportstraße nach dem Oberbegriff von Anspruch 1, und ein entsprechendes Verfahren nach dem Oberbegriff von Anspruch 13.

Aus dem Stand der Technik sind Seitenführungen für Walz- oder Gießerzeugnisse in Form eines Metallbandes, einer Bramme oder dergleichen bekannt, mit denen das Metallband bzw. die Bramme auf einer Transport- bzw. Walzstraße seitlich geführt und bezüglich einer Breite der Transportstraße ausgerichtet werden kann. Solche Seitenführungen können Rollenführungen oder Parallelführungen mit einander gegenüberliegenden Führungslinealen aufweisen, wobei hiermit jedoch konzeptionelle Nachteilen verbunden sind.

Aus WO 2010/149192 A1 sind ein Verfahren und eine Vorrichtung zum Bearbeiten einer Bramme bekannt, wobei die zugehörige Seitenführung aus einer Mehrzahl von einander gegenüberliegend angeordneten Führungsrollenpaaren besteht. Die einzelnen Rollen können durch Aktuatoren in Richtung der Bramme bewegt werden. Hierdurch kann die Bramme an unterschiedlichen Stellen in der Transport- bzw. Walzstraße zentriert werden. Die jeweiligen Führungsrollenpaare sind relativ weit voneinander beabstandet und insbesondere auf verschiedenen Seiten von Bearbeitungsvorrichtungen angeordnet.

Führungsrollenpaare, die z.B. aus WO 2010/149192 A1 oder auch aus JP 61222626 A bekannt sind, haben den Nachteil, dass auf die Bramme noch kein definiertes Drehmoment einwirken kann, solange nur ein Führungsrollenpaar mit der Bramme bzw. mit dem Brammenkopf in Eingriff ist. Dies hat zur Folge, dass die Bramme zwischen dem Führungsrollenpaar in Richtung einer Breite der Walzstraße verschoben, jedoch nicht definiert gedreht werden kann. Ein Drehmoment kann erst dann auf die Bramme aufgebracht werden, wenn stromabwärts ein nachfolgendes Führungsrollenpaar in Eingriff mit der Bramme gelangt. Falls die Führungsrollenpaare relativ weit zueinander beabstandet sind, kann die Bramme bei einem Transport zwischen diesen beiden Führungsrollenpaaren nachteilig noch nicht gezielt auf der Walzstraße verdreht werden. Anders ausgedrückt, ist die Aufbringung eines Drehmoments auf die Bramme erst verzögert möglich, nämlich nachdem der Brammenkopf in Eingriff mit einem weiteren Führungsrollenpaar gelangt ist. Ein weiterer Nachteil einer solchen Reihenschaltung von Führungsrollenpaaren besteht darin, dass der Brammenkopf zwischen den Führungsrollenpaaren seitlich verlaufen kann, da die Bramme in diesem Bereich nicht seitlich geführt wird.

Alternativ zu einer Rollenführung ist es auch bekannt, eine Bramme auf einer Walzstraße durch Führungslineale auszurichten, wie z. B. in DE 43 10 547 C2, in DE 41 29 988 C2 oder WO 2011/080174 A2 gezeigt. Ein seitliches Führen der Bramme durch solche Führungslineale, die gegen die Seitenränder der Bramme gefahren werden, ist nachteilig, weil die Kräfte zwischen den Führungslinealen und der Bramme ggf. eine hohe Reibung verursachen, die zu einer Transportunterbrechung bzw. zu einem "Steckenbleiben" der Bramme führen können. Falls die Bramme ausschließlich von Rollgangsrollen angetrieben wird und keine weiteren Zugkräfte z. B. durch einen Treiber oder ein Walzgerüst erfährt, sind bei dem Vorgang "Seitenführung" bezüglich der Bramme jedoch nur geringe Reibungen zulässig, um das genannte Steckenbleiben der Bramme zu verhindern.

Ein weiterer Nachteil von herkömmlichen Führungslinealen besteht darin, dass diese in der Regel sehr lang ausgeführt sind, was sich negativ auf die Anlagenlängen auswirkt. In diesem Zusammenhang ist ebenfalls von Nachteil, dass die Führungslineale, wie z. B. in DE 43 10 547 C2 gezeigt, einen Einlauftrichter bilden, der jedoch als Führungslänge verloren geht, wenn der Brammenkopf den Führungstrichter bereits passiert hat und anschließend kein Einlauftrichter mehr benötigt wird.

Der vorliegenden Erfindung liegt die Aufgabe zugrunde, eine Vorrichtung und ein Verfahren zum seitlichen Führen eines Walz- oder Gießerzeugnisses auf einer Transportstraße dahingehend zu optimieren, dass für das Walz- oder Gießerzeugnis ein Zentrieren auf der Transportstraße und ein gezieltes Ausrichten durch Aufbringen eines Drehmoments in kurzer Zeit und über einen kurzen Streckenabschnitt der Transportstraße möglich sind, um eine Kollision des Walz- oder Gießerzeugnisses mit in Transportrichtung nachfolgenden Komponenten zu verhindern und/oder einen mittigen Transport auf der Transportstrasse zu gewährleisten.

Diese Aufgabe wird durch eine Vorrichtung mit den Merkmalen von Anspruch 1 und durch ein Verfahren mit den Merkmalen von Anspruch 13. gelöst. Vorteilhafte Weiterbildungen der Erfindung sind in den abhängigen Ansprüchen definiert.

Ergänzend oder alternativ können die Führungslineale in einem unterschiedlichen Abstand zur Transportstrassen-Mitte angeordnet werden.

Die Erfindung eignet sich in gleicher Weise sowohl für Gießerzeugnisse als auch für Walzerzeugnisse. Deshalb wird nachfolgend hierfür stets der Begriff "Erzeugnis" verwendet.

Der Erfindung liegt die wesentliche Erkenntnis zugrunde, dass für die Führungslineale jeweils ein vorbestimmter Neigungswinkel ihrer Längsachse bezüglich der Transportrichtung des Erzeugnisses eingestellt werden kann, insbesondere in Abhängigkeit von einer jeweiligen Ist-Position des Erzeugnisses auf der Transportstraße. Hierdurch ist eine variable Konfiguration der Führungslineale relativ zueinander bzw. zum Erzeugnis möglich. Die Führungslineale können miteinander z. B. einen Führungstrichter für einen Einlauf des Gießerzeugnisses oder eine Parallelführung, nachdem die vordere Stirnseite des Gießerzeugnisses die einlaufseitigen Enden der Führungslineale passiert hat, bilden.

Ergänzend oder alternativ ist es möglich, dass die Führungslineale durch eine Betätigung der Stellantriebe derart angeordnet werden, dass sie im Vergleich zueinander einen unterschiedlichen Abstand zur Transportstrassen-Mitte aufweisen. Hierdurch ist es möglich, dass das Erzeugnis den Bereich der Führungslineale auf der Transportstrasse asymetrisch zur Transportstrassen-Mitte durchläuft.

Zweckmäßigerweise kann der Neigungswinkel der Führungslineale auch während eines Transports des Erzeugnisses auf der Transportstraße, d. h. bei einem Vorbeitreten des Erzeugnisses an den Führungslinealen, verstellt werden. Hierdurch ist es möglich, eine Querkraft bzw. ein Drehmoment auf das Erzeugnis aufzubringen. Ferner wird hierdurch eine Seitenführung bereitgestellt, die im gleichen Bauraum, der kompakte Abmessungen aufweist, sowohl einen Einlauftrichter bildet als auch als eine Parallelführung oder als einfache Rollenseitenführung wirken kann.

Die Kontaktrolle an dem Führungslineal kann dazu verwendet werden, das Erzeugnis zu stauchen, d.h. eine Breitenreduzierung zu bewirken. Entsprechend sind die Kontaktrolle und der jeweils zugeordnete Stellantrieb des zugehörigen Führungslineals derart ausgebildet, dass ausreichend hohe Kräfte auf eine Seitenkante bzw. -rand des Erzeugnisses ausgeübt werden, um die gewünschte Breitenreduktion zu erzielen. Zweckmäßigerweise sind hierzu einander gegenüberliegende Kontaktrollen an den jeweiligen Führungslinealen vorgesehen. Dies führt zu einer gleichmäßigen und kontrollierten Breitenreduktion für das Erzeugnis, wobei die Anstellkräfte der zugeordneten Stellantriebe vorzugsweise in entgegengesetzter Richtung verlaufen und sich bei gleichem Betrag gegenseitig aufheben.

Die Einstellung eines vorbestimmten Neigungswinkels für ein entsprechendes Führungslineal kann in einfacher Weise dadurch erfolgen, dass jedes Führungslineal mit jeweils zwei Stellantrieben gelenkig verbunden ist, wobei diese Gelenkverbindungen an den einlaufseitigen und auslaufseitigen Enden der Führungslineale vorgesehen sein können. Indem die beiden Stellantriebe für ein jedes Führungslineal unabhängig voneinander senkrecht zur Transportrichtung des Erzeugnisses betätigt werden, kann ein vorbestimmter Winkel einer Längsachse des entsprechenden Führungslineals bezüglich der Transportrichtung des Erzeugnisses eingestellt werden. Alternativ hierzu ist es auch möglich, pro Führungslineal lediglich einen Stellantrieb vorzusehen, der mit dem Führungslineal, z. B. in dessen mittigem Bereich, mit einer Gelenkverbindung verbunden ist, wobei diese Gelenkverbindung mit einem Stellmotor oder dergleichen für eine rotatorische Bewegung des Führungslineals ausgerüstet ist. Alternativ ist es möglich, pro Führungslineal zwei Stellantriebe vorzusehen, vorzugsweise am einlaufseitigen Ende und am auslaufseitigen Ende eines jeweiligen Führungslineals. Durch eine Betätigung des Stellmotors bzw. der beiden Stellantriebe lässt sich ein Führungslineal, wie erläutert, mit seiner Längsachse bezüglich der Transportrichtung des Erzeugnisses in einem vorbestimmten Winkel positionieren und/oder in einem vorbestimmten Abstand zur Transportstrassen-Mitte anordnen.

Die Anbringung von Kontaktrollen an den Führungslinealen hat den Vorteil, dass dadurch die Reibung zwischen dem Erzeugnis und den Führungslinealen weiter vermindert wird. In vorteilhafter Weiterbildung der Erfindung können die Kontaltrollen separat angetrieben werden, z. B. durch einen hydraulischen, pneumatischen oder elektromechanischen Antrieb. Hierdurch ist gewährleistet, dass das Erzeugnis zwischen den Führungslinealen, wenn von diesen eine seitliche Kraft auf die Seitenränder des Erzeugnisses aufgebracht wird, nicht "steckenbleibt".

Eine reibungsarme Führung des Erzeugnisses zwischen den Führungslinealen wird erfindungsgemäß dadurch verbessert, dass die Kontaktrollen an den Führungslinealen sowohl am einlaufseitigen Ende als auch am auslaufseitigen Ende angebracht sind. Optional kann eine Kontaktrolle an dem Führungslineal auch in dessen mittigen Bereich angeordnet sein. Indem die Kontaktrollen durch das Führungslineal miteinander verbunden sind, ist ein seitliches Verlaufen des Erzeugnisses mit seiner vorderen Stirnseite zwischen den Kontaktrollen nicht möglich.

Die Verbindung der Kontaktrollen mittels des Führungslineals hat den weiteren Vorteil, dass das Risiko einer Fehlsteuerung der Kontaktrollen, die an den jeweiligen auslaufseitigen Enden der Führungslineale angebracht sind, wegen der mechanischen Kopplung durch das Führungslineal an die Kontaktrollen, die an den jeweiligen einlaufseitigen Enden der Führungslineale angebracht sind, vermindert bzw. ausgeschlossen ist. Dies bedeutet, dass eine vordere Kante zwischen die Kontaktrollen gelangen kann, wobei ein Kontakt mit dem dazwischen angeordneten Führungslineal ein Festklemmen oder Festsetzen des Erzeugnisses verhindert.
Durch eine Kombination einer Rollenführung mit einer Linealführung ist es möglich, die Führungslineale in ihrer Gesamtlänge vergleichsweise kurz auszuführen. Die Länge der Führungslineale kann in Transportrichtung des Erzeugnisses weniger als 10 m, vorzugsweise weniger als 6 m, weiter vorzugsweise weniger als 4 m, betragen. Eine solche vergleichsweise kurze Länge der Führungslineale wirkt sich vorteilhaft auf kompakte Gesamtabmessungen einer Transport- bzw. Bearbeitungsstraße für Erzeugnisse aus.

Durch die Erfindung ist es nicht nur möglich, das Erzeugnis punktuell auf der Transportstraße zu zentrieren, sondern es durch Aufbringung eines Drehmoments in die Mitte der Transportstraße zu führen. In dieser Weise ist ein uneingeschränktes Führen des Erzeugnisses auf der Transportstraße in einer vorbestimmten Positionierung möglich. In Folge dessen können weitere Komponenten bzw. Bearbeitungsstationen, die in Transportrichtung stromabwärts der Führungslineale angeordnet sind, geeignet vor Kollisionen mit dem Erzeugnis geschützt werden.

Ausführungsbeispiele der Erfindung werden nachstehend anhand von schematisch vereinfachten Zeichnungen näher beschrieben.

Es zeigen:
- Fig. 1: schematisch eine Draufsicht auf eine erfindungsgemäße Vorrichtung zum seitlichen Führen eines Erzeugnisses,
- Fig. 2: schematisch eine Draufsicht auf eine erfindungsgemäße Vorrichtung nach einer weiteren Ausführungsform,
- Fig. 3-7: schematisch verschiedene Betriebszustände der Vorrichtung von Fig. 1 zum seitlichen Führen eines Erzeugnisses auf einer Transportstraße, und
- Fig. 8-10: schematisch vereinfachte Draufsichten auf ein Erzeugnis, das in unterschiedlichen Positionen auf einer Transportstraße aufliegt.

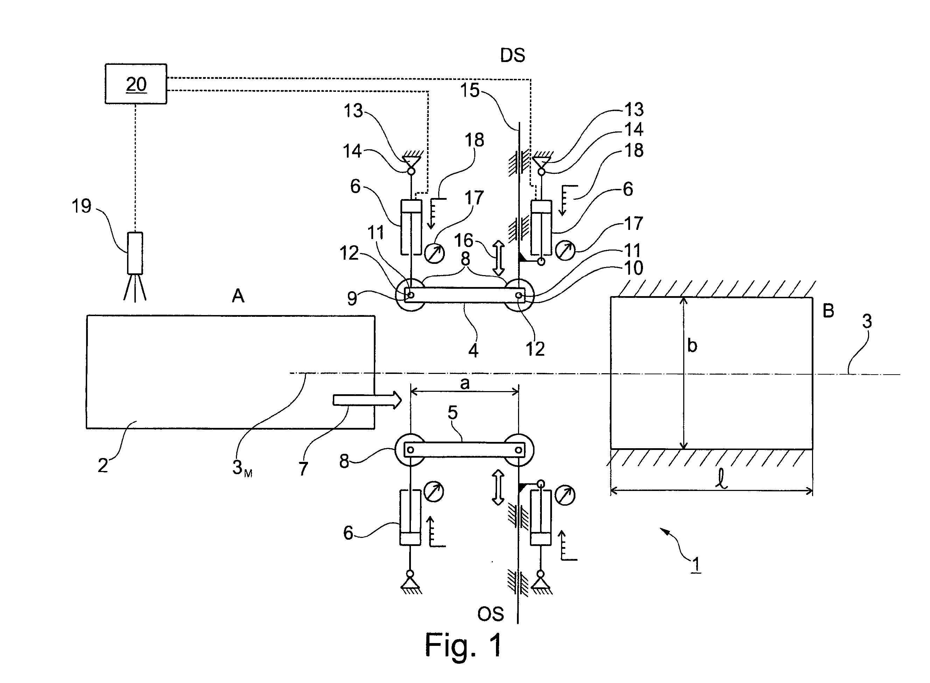

In Figur 1 ist schematisch vereinfacht eine Draufsicht auf eine erfindungsgemäße Vorrichtung gezeigt, mit der ein Gießerzeugnis 2 auf bzw. entlang einer Transportstraße 3 seitlich geführt werden kann. Die Transportstraße 3 ist in der Figur 1 vereinfacht durch eine strichpunktierte Linie angedeutet, wobei die Transportstraße 3 eine Komponente (Rollgang) einer Walzstraße sein kann. Eine symmetrische Mitte dieser Transportstrasse 3 ist nachfolgend als Transportstraßen-Mitte und in der Fig. 1 mit "3_{M}" bezeichnet Bei dem Gießerzeugnis 2 kann es sich um ein Metallband, eine Bramme oder ein sonstiges Walzgut handeln. Ohne hierin eine Einschränkung zu sehen, wird nachfolgend das Gießerzeugnis 2 stets als Bramme bezeichnet.

Die Vorrichtung 1 umfasst ein erstes Führungslineal 4 und ein zweites Führungslineal 5. Die Führungslineale 4, 5 sind auf beiden Seiten der Transportstraße 3 und einander gegenüberliegend angeordnet. Mit "DS" bzw. "OS" sind in Figur 1 eine Antriebsseite bzw. eine Bedienungsseite der Transportstraße 3 bezeichnet. Des Weiteren sind mit "A" eine Einlaufseite und mit "B" eine Auslaufseite bezüglich der Führungslineale 4, 5 bezeichnet. Dies bedeutet, dass die Bramme 2 von der Seite A her zwischen die Führungslineale 4, 5 transportiert wird, und in Richtung der Auslaufseite B die Führungslineale 4, 5 wieder verlässt. Im Bereich der Auslaufseite B können weitere Bearbeitungsstationen bzw. Folgekomponenten der Transportstraße 3 vorgesehen sein, wobei mit "b" eine Breite und mit "I" eine Länge dieser Folgekomponenten angedeutet sind.

Die Führungslineale 4, 5sind jeweils mit Stellantrieben 6 verbunden, die ein Bewegen der Führungslineale 4, 5 in Richtung einer Breite der Transportstraße 3 gewährleisten. Die Ausgestaltung dieser Stellantriebe 6 und deren Anbindung am ein entsprechendes Führungslineal 4, 5 können auf beiden Seiten der Transportstraße 3 gleich sein. Anders ausgedrückt, ist die Vorrichtung 1 symmetrisch zur Transportstraßen-Mitte 3_{M} aufgebaut. Entsprechend wird nachfolgend lediglich die Ausgestaltung der Stellantriebe 6 auf der Antriebsseite DS erläutert, wobei dies in gleicher Weise für die Bedienungsseite OS gilt.

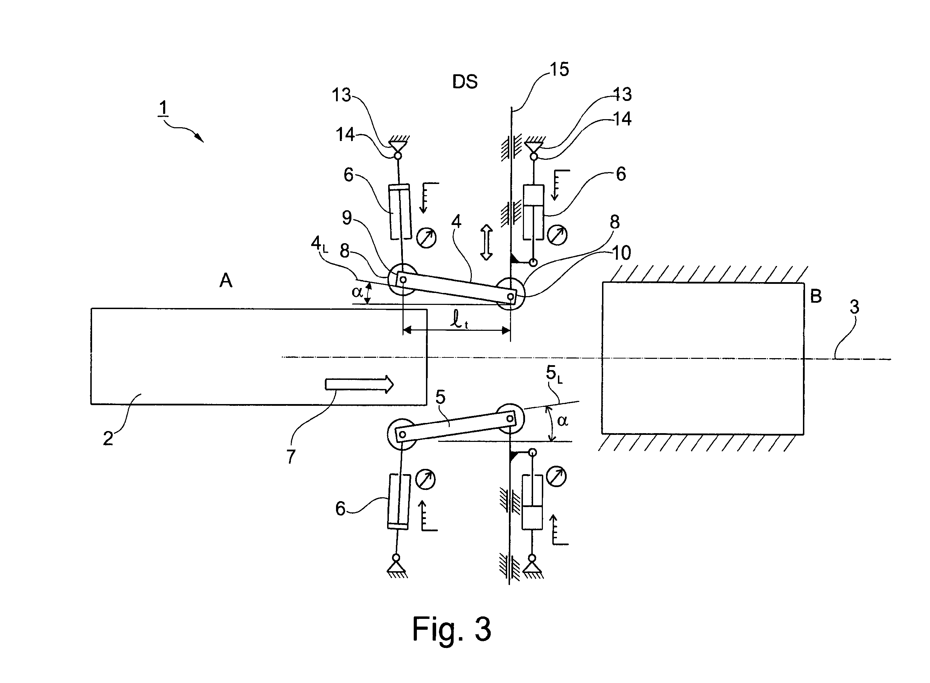

Für das auf der Antriebsseite DS angeordnete erste Führungslineal 4 sind zwei Stellantriebe 6 vorgesehen, die unabhängig voneinander betätigt werden können. Bei den Stellantrieben 6 kann es sich beispielsweise um Hydraulikzylinder handeln. Bei einer unterschiedlichen Ansteuerung der beiden Stellantriebe 6 kann ein vorbestimmter Winkel α (vgl. Figur 3) eingestellt werden, den eine Längsachse 4_{L} des Führungslineals 4 mit der Transportrichtung 7 einschließt. Anders ausgedrückt, kann durch eine unterschiedliche Ansteuerung der beiden Stellantriebe 6 ein Neigungswinkel des Führungslineals 4 bezüglich der Transportrichtung 7 eingestellt werden.

An dem ersten Führungslineal 4 sind Kontaktrollen 8 angebracht, nämlich an dessen einlaufseitigem Ende 9 und dessen auslaufseitigem Ende 10. Die beiden Stellantriebe 6 sind mit dem ersten Führungslineal 4 jeweils über eine Gelenkverbindung 11 verbunden. Die Stellantriebe 6 sind derart angeordnet, dass ihre Gelenkverbindungen 11 mit dem Führungslineal 4 einen Abstand a zueinander aufweisen. Hierbei sind die Gelenkverbindungen 11, mit denen die jeweiligen Betätigungsstangen der Stellantriebe 6 an dem ersten Führungslineal 4 angelenkt sind, koaxial zu einer jeweiligen Achse 12 einer zugehörigen Kontaktrolle 8 angeordnet. Beispielsweise können hierbei die Gelenkverbindung 11 und die Achse 12 zu einer Funktionseinheit zusammengefasst sein. Jedenfalls fallen die Drehachsen der Gelenkverbindung 11 und der Achse 12 für die hier erläuterte Ausführungsform zusammen.

Die Stellantriebe 6 sind an ihrer dem ersten Führungslineal 4 entgegengesetzten Seite gelenkig mit einem Gestell 13 verbunden, nämlich jeweils über ein Drehlager 14, das eine schwenkbare Lagerung für den jeweiligen Stellantrieb 6 bildet.

Unter Berücksichtigung der Gelenkverbindungen 11, über die die Stellantriebe 6 mit dem ersten Führungslineal 4 verbunden sind, und der genannnten Drehlager 14 an der entgegensetzten Seite der Stellantriebe 6 ist es für ein bestimmtes Positionieren des Führungslineals 4 von Bedeutung, dass die Betätigung von zumindest einem der Stellantriebe 6, entweder am einlaufseitigen Ende 9 oder am auslaufseitigen Ende 10, in eine Bewegung senkrecht zur Transportrichtung 7 umgesetzt wird. Bei der Ausführungsform von Figur 1 ist dies durch eine Schubführung 15 gewährleistet, die in senkrechter Richtung 16 bezüglich der Transportrichtung 7 der Bramme 2 verschieblich ist. Der Stellantrieb 6, der an dem auslaufseitigen Ende 10 des Führungslineals 4 angreift, steht mit dieser einen Schubführung 15 in Wirkverbindung, nämlich dadurch, dass eine Kolbenstange dieses Stellantriebs an der Schubführung 15 geeignet befestigt ist..

Die Schubführung 15 kann in einfachster Weise als Stangenelement mit rundem oder eckigem Querschnitt ausgebildet sein, das axial in einer daran angepassten Kulisse geführt ist. Alternativ ist auch eine Führung einer Rolle, die in einem in einem Rahmen bewegten Einbaustück gelagert, möglich. Das Zusammenwirken des Stellantriebs 6 mit der Schubführung an dem auslaufseitigen Ende 10 des ersten Führungslineals 4 kann dadurch gebildet sein, dass die Betätigungsstange dieses Stellantriebs 6 mit dem Stangenelement der Schubführung 15 verbunden ist, z. B. durch Verschweißen oder Verschrauben. Entsprechend führt eine Betätigung dieses Stellantriebs 6 zu einem axialen Verschieben der Schubführung 15 in die Schubrichtung 16, d. h. in Richtung einer Mitte der Transportstraße 3 oder weg davon, und damit zu einem Bewegen der an dem auslaufseitigen Ende 10 des ersten Führungslineals 4 angebrachten Kontaktrolle 8 senkrecht zur Transportrichtung 7.

Alternativ zu der erläuterten Schubführung 15 ist es auch möglich, den Stellantrieb 6, z. B. am auslaufseitigen Ende 10 des Führungslineals 4, ohne ein Drehlager an dem Gestell 13 in einer bestimmten Richtung festzulegen bzw. zu befestigen, wobei eine Längsrichtung dieses Stellantriebs 6 vorzugsweise senkrecht zur Transportrichtung 7 der Bramme 2 ausgerichtet ist. Eine Betätigungsstange dieses Stellantriebs 6 ist für diesen Fall wie vorstehend erläutert gelenkig mit dem auslaufseitigen Ende 10 des Führungslineals 4 über die Gelenkverbindung 11 verbunden. Für die vorliegende Erfindung ist die soeben genannte ortsunveränderliche Befestigung eines Stellantriebs 6 an dem Gestell 13 ebenfalls im Sinne einer Schubführung zu verstehen, die eine Bewegung einer zugeordneten Gelenkverbindung mit dem Führungslineal senkrecht zur Transportrichtung gewährleistet.

Falls die Stellantriebe 6 am einlaufseitigen Ende 9 und am auslaufseitigen Ende 10 des ersten Führungslineals 4 voneinander unterschiedlich betätigt werden, kann die daraus resultierende Schrägstellung des Stellantriebs 6, der bei der Ausführungsform von Figur 1 mit dem einlaufseitigen Ende 9 des Führungslineals 4 verbunden ist, durch die Gelenkverbindung 11 und das Drehlager 14 ausgeglichen werden.

Die Ansteuerung der beiden Stellantriebe 6 kann kraftgesteuert und/oder weggesteuert erfolgen. Hierzu sind pro Stellantrieb 6 ein Druckgeber 17 und ein Weggeber 18 vorgesehen.

Position und Form der Bramme 2 auf der Transportstraße 3 können durch zumindest eine Messeinrichtung bzw. Sensoreinrichtung 19 erfasst werden, die signaltechnisch mit einer Steuereinrichtung 20 verbunden ist (in Fig. 1 symbolisch vereinfacht durch eine gestrichelte Linie gezeigt). Eine solche Messeinrichtung kann vorzugsweise als Abstandsmesser oder dergleichen ausgebildet sein, z.B. in Form eines Laserabstandsmesser. Die Position der Messeinrichtung 19, wie in Figur 1 gezeigt, ist nur beispielhaft zu verstehen. Abweichend hiervon kann die Messeinrichtung 19 auch mittig zwischen den beiden Führungslinealen 4, 5, oder auch stromabwärts der Führungslineale 4, 5 im Bereich der Auslaufseite B angeordnet sein. Es ist auch möglich, eine Mehrzahl von Messeinrichtungen 19 an verschiedenen Orten der Transportstraße 3 vorzusehen, die jeweils mit der Steuereinrichtung 20 verbunden sind. Bezüglich der zumindest einen Messeinrichtung 19 versteht sich, dass es sich hierbei um ein optionales Merkmal für die Vorrichtung 1 handelt.

Die Stellantriebe 6 werden durch die Steuereinrichtung 20 geeignet angesteuert, nämlich in Abhängigkeit von der Brammenbreite und/oder der Signale von dem Druckgeber 17 und/oder von dem Weggeber 18. Hierzu sind die Stellantriebe 6 mit der Steuereinrichtung 20 signaltechnisch verbunden, was in Fig. 1 durch gestrichelte Linien symbolisch vereinfacht angedeutet ist. Falls für die Ausführungsform von Fig. 1 auch eine Sensoreinrichtung 19 vorgesehen ist, so kann die Ansteuerung der Stellantriebe auch in Abhängigkeit von der durch die Sensoreinrichtung 19 erfassten Ist-Position und Form der Bramme 2 auf der Transportstraße 3 erfolgen. In diesem Zusammenhang darf darauf verwiesen werden, dass im Sinne der vorliegenden Erfindung die Ist-Position und Form der Bramme 2 sowohl bezüglich einer Breite der Transportstraße 3 als auch bezüglich einer Position entlang der Transportstraße 3, d. h. entlang der Transportrichtung 7, verstanden wird. Dies hat zur Folge, dass die Ansteuerung der Stellantriebe 6 zum Bewegen der Führungslineale 4, 5 in Abhängigkeit der erfassten Ist-Position und Ist-Form der Bramme 2 erfolgt, um eine gewünschte Soll-Position der Bramme 2 auf der Transportstraße 3 einzustellen. Bei einer ausreichenden Dimensionierung der Stellantriebe kann eine auf die Bramme aufgebrachte Querkraft so groß sein, dass durch den Kontakt mit den Führungslinealen 4, 5 bzw. der daran angebrachten Kontaktrollen 8 die Bramme 2 gestaucht und somit ihre Breite reduziert wird.

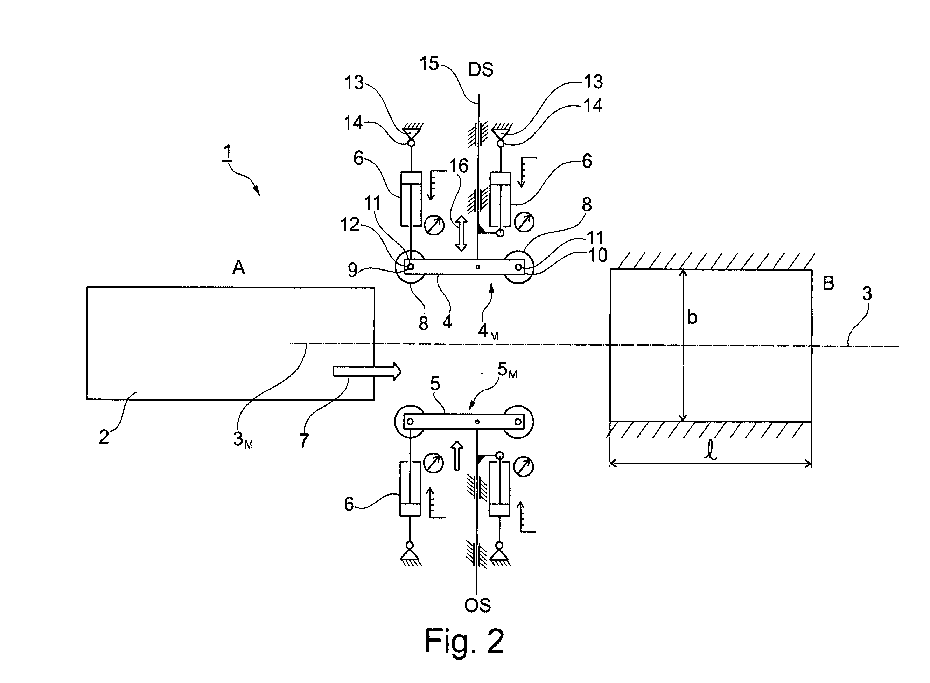

In Figur 2 ist eine weitere Ausführungsform der erfindungsgemäßen Vorrichtung 1 dargestellt. Der Aufbau dieser Ausführungsform ist ähnlich zur Ausführungsform von Figur 1, wobei entsprechende Bauteile mit den gleichen Bezugsziffern versehen sind. Zur Vereinfachung sind in der Darstellung von Fig. 2 die Sensoreinrichtung 19 und die Steuereinrichtung 20 nicht gezeigt, wobei diese Bauelemente bei der Ausführungsform gemäß Fig. 2 ebenfalls vorgesehen sein können.

Die Ausführungsform der Figur 2 unterscheidet sich von der Ausführungsform der Figur 1 dadurch, dass die Schubführung 15 an dem ersten Führungslineal 4 nicht an dessen auslaufseitigem Ende 10 angelenkt ist, sondern - in der Ansicht von Figur 2 weiter nach links - in Richtung des einlaufseitigen Endes 9 verschoben ist. Entsprechend ist die Gelenkverbindung 11 zwischen der Schubführung 15 und dem ersten Führungslineal 4 nun nicht koaxial zur Achse 12 der Kontaktrolle 8 an dem auslaufseitigen Ende 10 des ersten Führungslineals 4 angeordnet, sondern in einem in etwa mittigen Bereich 4_{M} des ersten Führungslineals 4. Eine solche Anordnung der Schubführung 15 in Verbindung mit dem Stellantrieb 6 hat im Vergleich zur Ausführungsform von Figur 1 den Vorteil einer kompakteren Bauform. Gleichwohl bleibt für die Ausführungsform von Figur 2 der Funktionsmechanismus, mit dem durch eine unterschiedliche Ansteuerung der Stellantriebe 6 ein Verschwenken des Führungslineals 4 möglich ist, im Vergleich zur Ausführungsform von Figur 1 unverändert gleich, so dass zur Vermeidung von Wiederholungen auf die Erläuterungen zu Figur 1 verwiesen wird.

Eine weitere (nicht gezeigte) Ausgestaltung der Gelenkverbindung der Stellantriebe mit dem Führungslineal kann dadurch gegeben sein, dass die beiden Stellantriebe 6 von Figur 1 vertauscht werden. Dies bedeutet, dass die Schubführung 15 mit dem ihr zugeordneten Stellantrieb 6 gelenkig mit dem einlaufseitigen Ende 9 des Führungslineals 4 verbunden ist, wobei der andere Stellantrieb am auslaufseitigen Ende 10 des Führungslineals 4 angelenkt und über ein Drehlager 14 mit dem Gestell 13 verbunden ist.

Nachfolgend werden verschiedene mögliche Betriebszustände der Vorrichtung 1 zur Durchführung des erfindungsgemäßen Verfahrens im Detail erläutert.

Wie vorstehend unter Bezugnahme auf die Figur 1 erläutert, lassen sich die vier Stellantriebe 6 für die beiden Führungslineale 4, 5 unabhängig voneinander betätigen. Entsprechend können die Führungslineale 4, 5 sowohl in Richtung der Breite der Transportstraße 3 bewegt als auch mit ihrer Längsachse 4_{L}, 5_{L} bezüglich der Transportrichtung 7 in einem vorbestimmten Winkel eingestellt werden. Hierdurch kann mit den Führungslinealen 4, 5 sowohl ein Trichter zum "Fangen" der Bramme 2 gebildet als auch ein Drehmoment erzeugt werden, das auf die Bramme 2 für ein punktuelles Verdrehen auf der Transportstraße 3 ausgeübt wird. Dies ist nun anhand der Figuren 3-7 für verschiedene Betriebszustände der Führungslineale 4, 5 im Einzelnen erläutert.

Figur 3 zeigt schematisch vereinfacht eine Draufsicht auf die Vorrichtung 1 gemäß der Ausführungsform von Figur 1. In dem in Figur 3 gezeigten Betriebszustand sind die einlaufseitigen Enden 9 der Führungslineale 4, 5 relativ zueinander weiter voneinander beabstandet als die auslaufseitigen Enden 10. Dies hat zur Folge, dass die Führungslineale 4, 5 mit ihren Längsachsen 4_{L}, 5_{L} bezüglich der Transportrichtung 7 in dem Winkel α positioniert sind. Hierdurch wird mit den Führungslinealen 4, 5 ein sogenannter Einlauftrichter gebildet, der eine Trichterlänge Iₜ aufweist. In der Betriebsstellung von Figur 3 kann beispielsweise der Kopf der Bramme 2 gefangen und zentriert werden. Die eingestellte Winkelstellung der Führungslineale 4, 5 mit ihren Längsachsen 4_{L}, 5_{L} bezüglich der Transportrichtung 7 wird zweckmäßigerweise in Abhängigkeit von einer jeweiligen Breite der Bramme 2 und ihrer Ist-Position auf der Transportstraße 3 gewählt.

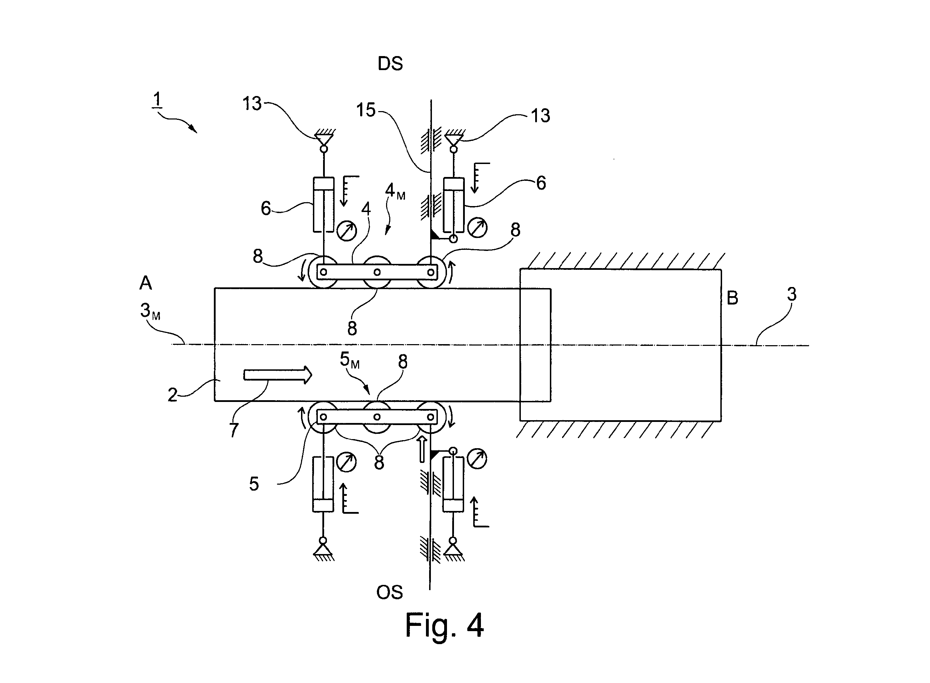

Die Betriebsstellung gemäß Figur 3 mit dem erläuterten Einlauftrichter wird vorzugsweise für ein Einlaufen der Bramme 2 gewählt, d. h. wenn eine vordere Stirnseite der Bramme 2 an den Kontaktrollen 8 an den einlaufseitigen Enden 10 der Führungslineale 4, 5 vorbei tritt. Figur 4 zeigt einen weiteren möglichen Betriebszustand, der für die Führungslineale 4, 5 eingestellt werden kann, nachdem die vordere Stirnseite der Bramme 2 auch die Kontaktrollen 8 an dem auslaufseitigen Ende der Führungslineale 4, 5 passiert hat. Die Stellantriebe 6 werden dann derart betätigt, dass die Führungslineale 4, 5 parallel angeordnet sind, nämlich sowohl relativ zueinander als auch bezüglich der Transportrichtung 7. Die Führungslineale 4, 5 sind dabei so weit in Richtung einer Transportstraßen-Mitte 3_{M} bewegt, dass die Kontaktrollen 8 in Kontakt mit einem Seitenrand der Bramme 2 gelangen. Insoweit kann die Bramme 2 bei einer Bewegung in der Transportrichtung 7 an den Kontaktrollen 8 abrollen. In Fig. 4 sind die Rotationsrichtungen der Kontaktrollen 8 jeweils durch gekrümmte Pfeile angedeutet.

Alternativ können die Führungslineale 4, 5 parallel zueinander eingestellt sein, wobei das Öffnungsmaß, d.h. der Abstand der Führungslineale 4, 5 zueinander, größer als die Breite der Bramme 2 gewählt ist. Hierdurch stellt sich ein Spalt zwischen der bzw. den Kontaktrollen 8 und den Seitenrändern der Bramme 2 ein.

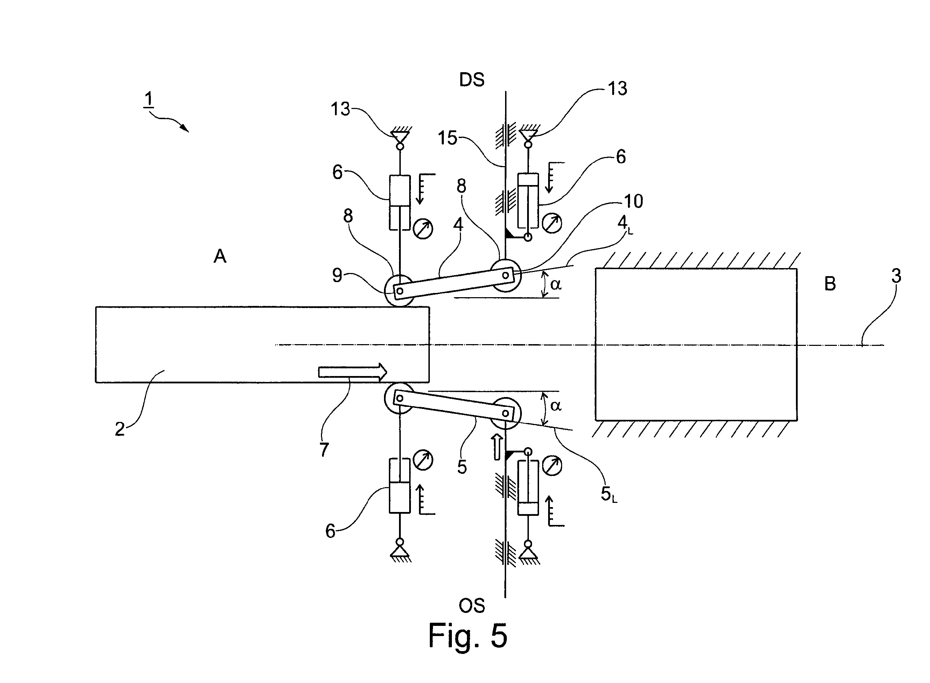

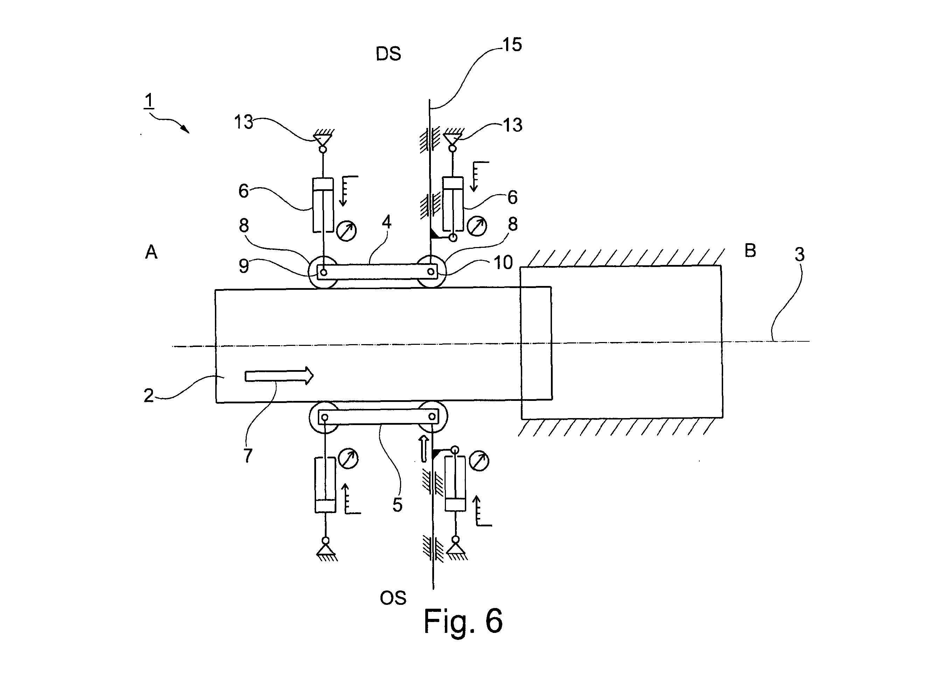

Ein weiterer möglicher Betriebszustand für die Vorrichtung 1 ist in der Draufsicht von Figur 5 gezeigt. Dieser Betriebszustand ist invers zum Betriebszustand gemäß Figur 3 zu verstehen, wobei nun die beiden Führungslineale 4, 5 mit ihren Längsachsen 4_{L}, 5_{L} derart bezüglich der Transportrichtung 7 geneigt sind, dass sie einen zum Auslaufbereich B hin offenen Trichter bilden. Durch diesen Betriebszustand wird erreicht, dass die Bramme 2 kurz nach dem Passieren der Kontaktsrollen 8 am einlaufseitigen Ende 9 der Führungslineale 4, 5 sofort gefasst und bezüglich einer Breite der Transportstraße 3 zentriert wird. Die Kontaktrollen 8 am auslaufseitigen Ende 10 der Führungslineale 4, 5 können anschließend, nachdem die vordere Stirnseite der Bramme 2 auch dieses Kontaktrollenpaar passiert hat, auf Kontakt gegen die Seitenränder der Bramme gefahren werden, wie es durch die Draufsicht von Figur 6 veranschaulicht ist.

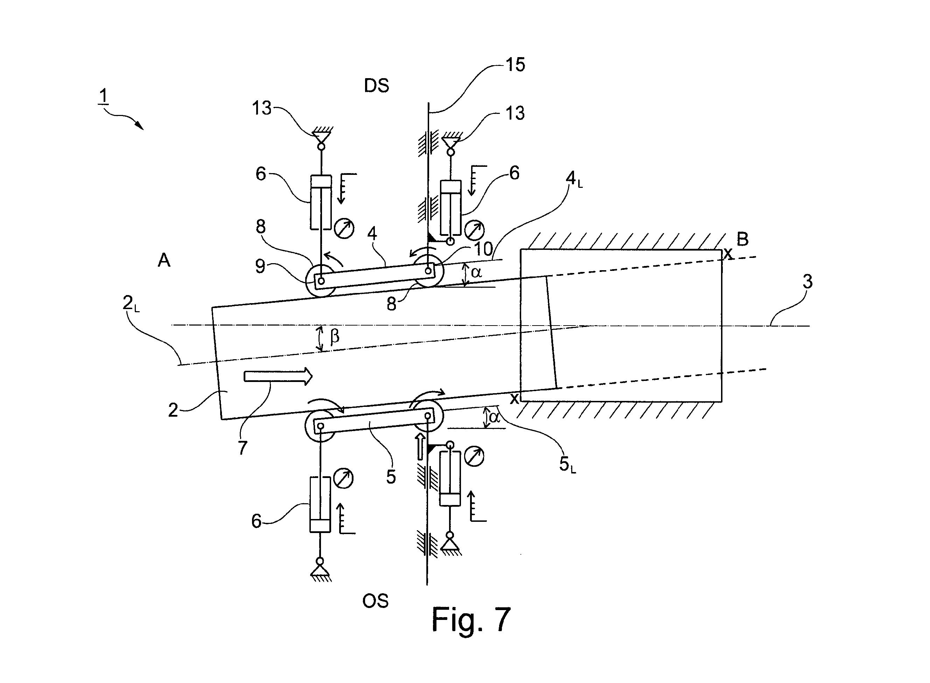

Ein weiterer möglicher Betriebszustand für die Vorrichtung 1 ist schließlich in der Draufsicht von Figur 7 dargestellt. Hierbei sind die Führungslineale 4, 5 sowohl parallel zueinander eingestellt als auch mit ihrer jeweiligen Längsachse 4_{L}, 5_{L} um den gleichen Winkel α bezüglich der Transportrichtung 7 geneigt angeordnet. Durch eine relative Verschiebung der Kontaktrollenpaare am einlaufseitigen Ende 9 bzw. am auslaufseitigen Ende 10 der Führungslineale 4, 5, quer zur Transportrichtung 7, kann ein definiertes Drehmoment auf die Bramme 2 ausgeübt werden. Dies ermöglicht ein Drehen der Bramme 2 während eines Banddurchlaufs bzw. während eines Transports der Bramme 2 entlang der Transportstraße 3, bei ständigem Rollenkontakt aller Kontaktrollen 8 mit den Seitenrändern der Bramme 2. Die Rotationsrichtungen der Kontaktsrollen 8 sind in der Fig. 7 wiederum jeweils durch gekrümmte Pfeile angedeutet. Hiermit kann bezüglich der Bramme 2 eine definierte Richtung und eine definierte Mittenposition der Brammenspitze eingestellt werden, so dass ein mittiger Durchlauf im Mittel in einer Folgekomponente der Transportstraße, stromabwärts der Vorrichtung 1, gewährleistet ist. Ein ausreichender seitlicher Abstand der Bramme 2 von einer Folgekomponente stromabwärts der Vorrichtung 1 ist in Figur 7 vereinfacht durch die beiderseits der Bramme 2 mit "x" bezeichneten Strecken angedeutet. Eine Schräglage der Bramme 2 auf der Transportstraße 3 ist durch einen Winkel β angedeutet, der zwischen einer Längsachse 2_{L} der Bramme 2 und der Transportrichtung 7 eingeschlossen ist.

Bezugnehmend auf die Darstellung von Fig. 7 wird darauf hingewiesen, dass gemäß eines (nicht gezeigten) Betriebszustandes der Erfindung es auch möglich ist, dass die Führungslineale 4, 5 in Verbindung mit den daran angebrachten Kontaktrollen 8 im Vergleich zueinander an der Antriebsseite "DS" bzw. an der Bedienungsseite "OS" bezogen auf die Transportstrassen-Mitte 3_{M} unterschiedlich weit verstellt werden. Dies bedeutet, dass die Führungslineale jeweils einen unterschiedlichen Abstand zur Transportstrassen-Mitte 3_{M} aufweisen. In Folge dessen durchläuft die Bramme 2 den Bereich der Führungslineale dann asymetrisch.

Bei allen Betriebszuständen gemäß der Figuren 3-7 werden die Führungslineale 4, 5, nachdem eine vordere Stirnseite bzw. die Brammenspitze der Bramme 2 auch die Kontaktrollen 8 am auslaufseitigen Ende 10 der Führungslineale 4, 5 passiert hat, in Richtung der Transportstraßen-Mitte 3_{M} bewegt, so dass alle Kontaktrollen 8 in Rollkontakt mit den Seitenrändern der Bramme 2 gelangen. Falls hierbei eine Antriebskraft von (nicht gezeigten) Rollgangsrollen zum Transport der Bramme 2 nicht ausreichen sollte, so können die an den Führungslinealen 4, 5 angebrachten Kontaktrollen 8 separat angetrieben werden, um eine zusätzliche Antriebskraft auf die Bramme 2 auszuüben und damit ein "Steckenbleiben" der Bramme 2 auf der Transportstraße 3 zu verhindern.

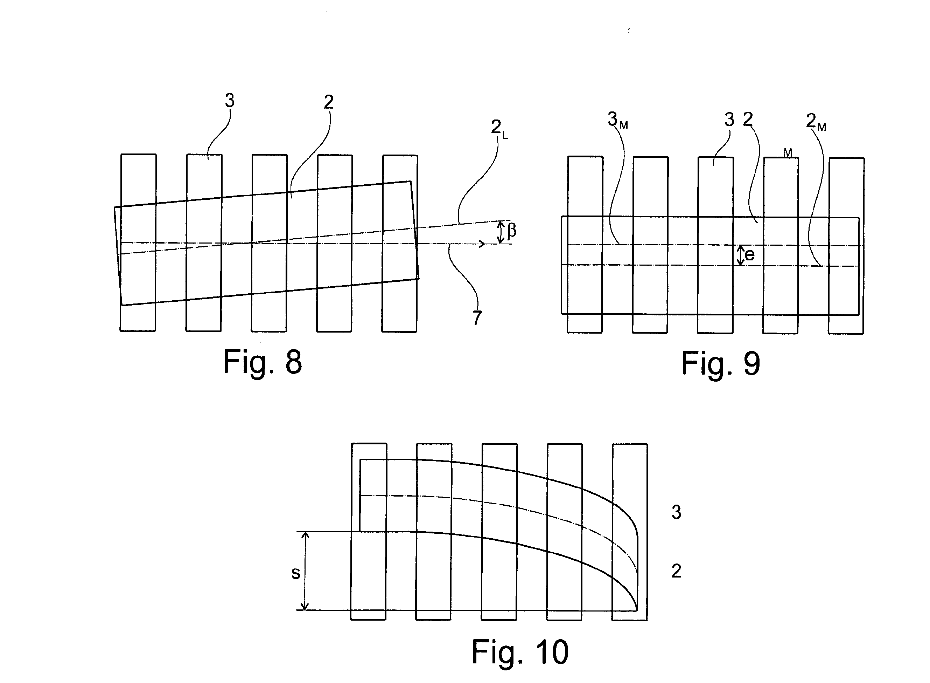

Bezüglich aller der oben genannten Ausführungsformen der Erfindung versteht sich, dass damit verschiedene Formen und/oder Positionen der Bramme 2 von den Führungslinealen 4, 5 geeignet geführt werden können. In den Figuren 8-10 sind bezüglich einer Bramme 2 unterschiedliche Positionen bzw. Formen gezeigt, nämlich in einer Schräglage auf der Transportstraße 3, bei der eine Längsachse 2_{L} der Bramme 2 mit der Transportrichtung 7 einen Winkel β einschließt (Figur 8), mit einer Exzentrizität e, um die eine Mittenachse 2_{M} der Bramme 2 von einer Transportstraße-Mitte 3_{M} beabstandet ist (Figur 9), und in Form eines sogenannten Bandsäbels (Figur 10), bei dem ein vorderes Ende der Bramme 2 eine Sehnenhöhe s bezüglich einer Grundfläche der Bramme 2 aufweist.

Die Führungslineale 4, 5 werden nicht nur für die Stirnseite bzw. den Brammenkopf der Bramme 2 geeignet eingestellt, sondern können auch über der gesamten Brammenlänge in Abhängigkeit der Brammenform und -position unterschiedlich positioniert werden.

Die Darstellung von Fig. 4 zeigt beispielhaft eine weitere mögliche Ausführungsform, wonach an den beiden Führungslinealen 4, 5 in den zugehörigen mittigen Bereichen 4_{M} ,5_{M} jeweils eine weitere Kontaktrolle 8 gelagert angebracht ist. Somit sind an beiden Führungslinealen 4, 5 insgesamt jeweils drei Kontaktrollen 8 vorgesehen. Die mittigen Kontaktrollen 8 verbessern die Führungseigenschaften der Führungslineale 4, 5 und verhindern in Festklemmen der Bramme 2, falls der Brammenkopf schräg gegen einen mittigen Bereich der Führungslineale 4, 5 stoßen sollte. Zusätzlich wird durch die mittigen Kontaktrollen 8 ein Breitenreduktion der Bramme 2 verbessert, d.h. gleichmäßiger durchgeführt, falls die Führungslineale mit einer entsprechend großen Kraft gegen die Bramme 2 angestellt werden.

Bezüglich aller in der Zeichnung erläuterten Ausführungsformen versteht sich, dass hierbei an zumindest einem Führungslineal 4, 5 zumindest drei Kontaktrollen 8 vorgesehen sein können, in Entsprechung der Darstellung von Fig. 4. Weiter alternativ ist es möglich, dass an zumindest einem Führungslineal 4, 5 zwei Kontaktrollen 8 angebracht sind, nämlich sowohl im mittigen Bereich 4_{M} ,5_{M} (vgl. Fig. 4) als auch an dessen einlaufseitigem Ende 9.

Unter Berücksichtigung der Signale der Druckgeber 17 kann beim Anstellen der Führungslineale 4, 5 an die Bramme 2, wenn die Kontaktrollen 8 in Kontakt mit den Seitenrändern der Bramme 2 gelangen, die Stellantriebe 6 derart kraftbetätigt angesteuert werden, dass eine Kraft, mit der die Kontaktrollen 8 gegen die Seitenränder der Bramme 2 gedrückt werden, einen vorbestimmten Grenzwert nicht überschreitet. In dieser Weise wird eine Schädigung der Bramme 2 wirkungsvoll verhindert. Eine solche Ansteuerung der Stellantriebe 6 erfolgt für den Fall, dass ein Stauchen bzw. eine Breitenreduktion für die Bramme 2 nicht gewünscht ist.

Unter Berücksichtigung der Signale der Weggeber 18 kann von der Steuereinrichtung 20 ein Rückschluss auf die jeweiligen Positionen der beiden Führungslineale 4, 5 bzw. der daran angebrachten Kontaktrollen in Bezug auf die Transportstraßen-Mitte 3_{M} gewonnen werden. In der Steuereinrichtung 20 sind vorbestimmte Grenzwerte bezüglich der Abstände bzw. Positionen abgespeichert, die von den Kontaktrollen 8 bezüglich eines Seitenrandes der Transportstraße 3 nicht unterschritten werden dürfen. Falls von der Steuereinrichtung 20 erkannt wird, dass diese definierten Grenzwerte unterschritten werden - falls also die Kontaktrollen 8 eines Führungslineals zu nahe an einem Randbereich der Transportstraße 3 angeordnet sind - wird durch eine geeignete Ansteuerung der Stellantriebe 6 das zugehörige Führungslineal zurück in Richtung der Transportstraßen-Mitte 3_{M} bewegt, um die Bramme 2 wieder auf eine optimale Bahn und/oder in eine definierte Richtung zu führen, um stromabwärts der Vorrichtung 1 eine kollisionsfreie Mittenlage der Bramme 2 auf der Transportstraße 3 sicherzustellen. Eine solche Wegregelung sorgt dafür, dass die Bramme 2 auf einer Bahnkurve geleitet wird, die in ihrer zeitlichen und geometrischen Form derart ausgestaltet ist, dass stromabwärts der Vorrichtung 1 angeordnete Folgekomponenten der Transportstraße 3 nicht berührt bzw. beschädigt werden.

Falls die Vorrichtung 1 mit einer in Figur 1 gezeigten Mess- bzw. Sensoreinrichtung 19 ausgerüstet ist, die insbesondere den Einlaufbereich A stromaufwärts der Vorrichtung 1 überwacht, so kann damit frühzeitig eine Position der Bramme 2 als auch deren Form auf der Transportstraße 3 erkannt werden, bevor die Bramme 2 die Führungslineale 4, 5 erreicht. In Abhängigkeit der von der Sensoreinrichtung 19 erfassten Ist-Position und Ist-Form der Bramme 2 auf der Transportstraße 3, insbesondere bei Vorliegen einer nicht geplanten Exzentrizität e (vgl. Figur 9), können die Führungslineale 4, 5 wie in Figur 3 erläutert einen Trichter ausbilden, um die vordere Stirnseite der Bramme 2 "einzufangen". Die jeweiligen Winkel α, die für die beiden Führungslineale 4, 5 eingestellt werden, ergeben sich aus der jeweiligen Ist-Position der Bramme 2 auf der Transportstraße 3.

In Weiterbildung der Erfindung kann auch eine Position der Bramme 2 hinter der Vorrichtung 1, d. h. stromabwärts davon, ermittelt werden. Dies kann durch eine ständige Überwachung der Position der kraftgesteuerten Führungslineale 4, 5 bzw. der daran angebrachten Kontaktrollen 8 erfolgen, um den weiteren Transport der Bramme 2 hinter der Vorrichtung 1 zu ermitteln. Aus den zu verschiedenen Zeitpunkten gemessenen Werten kann die Position der Bramme 2 über eine definierte Länge I und eine Breite b (vgl. Figur 1) stromabwärts der Vorrichtung 1 ermittelt werden. Somit lassen sich Kollisionen mit angrenzenden und nachfolgenden Baukomponenten, z. B. eine Schere, eine Induktivheizung oder dergleichen, vermeiden, indem die Bramme 2 entsprechend geführt oder bei drohender Kollision gestoppt wird.

Eine weitere vorteilhafte Überwachungsmöglichkeit des Bahnverlaufs der Bramme 2 auf der Transportstraße 3 ist durch zusätzliche Messinstrumente möglich, z. B. Abstandsmesser, vorzugsweise basierend auf Lasertechnologie, oder Kameras (optisch und/oder Wärmebildkameras), durch die die Brammenkanten über eine Länge der Bramme relativ zu einer Bezugsebene oder zu einem Bezugspunkt festgestellt werden können. Diese Messinstrumente können in gleicher Weise wie die Sensoreinrichtung 19 mit der Steuereinrichtung 20 signaltechnisch verbunden sein. Hierdurch ist es möglich, die vollständige Bramme 2 zu orten und mittels der Führungslineale 4, 5 auf einer geeigneten vorbestimmten Bahnkurve über die Transportstraße 3 und kollisionsfrei durch seitliche Begrenzungen hindurchzuleiten.

## Patentansprüche

1. Vorrichtung (1) zum seitlichen Führen eines Walz- oder Gießerzeugnisses (2) in Form eines Metallbandes, einer Bramme oder dergleichen auf einer Transportstrasse (3), umfassend
ein erstes Führungslineal (4) und ein zweites Führungslineal (5), wobei die Führungslineale (4, 5) einander gegenüberliegend beiderseits der Transportstrasse (3) angeordnet und für ein Bewegen in Richtung einer Breite der Transportstrasse (3) mit jeweils zumindest einem Stellantrieb (6) verbunden sind, die senkrecht zur Transportrichtung (7) des Walz- oder Gießerzeugnisses (2) betätigbar sind,
wobei das erste Führungslineal (4) und/oder das zweite Führungslineal (5) durch eine Betätigung des jeweils zugeordneten Stellantriebs derart anordenbar sind, dass sie unabhängig voneinander jeweils mit ihrer zugehörigen Längsachse (4_{L}, 5_{L}) bezüglich der Transportrichtung (7) des Walz- oder Gießerzeugnisses (2) in einem vorbestimmten Winkel (α) und/oder in einem unterschiedlichen Abstand zur Transportstraßen-Mitte (3_{M}) positionierbar sind,
wobei das erste Führungslineal (4) und/oder das zweite Führungslineal (5) zumindest eine Kontaktrolle (8) aufweist, die durch eine Bewegung des entsprechenden Führungslineals (4, 5) in Kontakt mit einem Seitenrand des Walz- oder Gießerzeugnisses (2) bringbar ist, um das Walz- oder Gießerzeugnis (2) zu führen und/oder zur Reduktion von dessen Breite zu stauchen,
**dadurch gekennzeichnet,**
**dass** das erste und/oder das zweite Führungslineal (4, 5) jeweils zwei Kontaktrollen (8) aufweist, wobei die Kontaktrollen (8) jeweils an dem einlaufseitigen Ende (9) und an dem auslaufseitigen Ende (10) des entsprechenden Führungslineals (4, 5) angebracht sind.

2. Vorrichtung (1) nach Anspruch 1, **dadurch gekennzeichnet, dass** eine Kontaktsrolle (8) an dem ersten und/oder an dem zweiten Führungslineal (4, 5) an dessen einlaufseitigem Ende (9) angebracht ist und/oder in einem mittigen Bereich (4_{M}, 5_{M}) davon angebracht ist.

3. Vorrichtung (1) nach Anspruch 1 oder 2, **dadurch gekennzeichnet, dass** das erste Führungslineal (4) und/oder das zweite Führungslineal (5) über eine Gelenkverbindung (11) mit ihrem jeweils zugeordneten Stellantrieb (6) verbunden ist.

4. Vorrichtung (1) nach Anspruch 3, **dadurch gekennzeichnet, dass** im Bereich der Gelenkverbindung (11) ein Stellmotor oder dergleichen für eine rotatorische Bewegung des Führungslineals (4, 5) vorgesehen ist, so dass das Führungslineal (4, 5) mit seiner Längsachse (4_{L}, 5_{L}) bezüglich der Transportrichtung (7) des Walz- oder Gießerzeugnisses (2) in dem vorbestimmten Winkel (α) positionierbar ist.

5. Vorrichtung (1) nach einem der Ansprüche 1 bis 4, **dadurch gekennzeichnet, dass** für das erste Führungslineal (4) und/oder für das zweite Führungslineal (5) jeweils zwei Stellantriebe (6) vorgesehen sind, die mit dem entsprechenden Führungslineal (4, 5) gelenkig (11) verbunden, voneinander beabstandet angeordnet und unabhängig voneinander ansteuerbar sind, vorzugsweise, dass die Gelenkverbindung (11) zumindest einer dieser Stellantriebe (6) mit dem Führungslineal (4, 5) koaxial oder angrenzend zur Achse (12) einer an dem Führungslineal (4, 5) angebrachten Kontaktrolle (8) angeordnet ist.

6. Vorrichtung (1) nach Anspruch 5, **dadurch gekennzeichnet, dass** die Gelenkverbindungen (11) der beiden Stellantriebe (6) mit dem Führungslineal jeweils koaxial oder angrenzend zur Achse (12) der an dem einlaufseitigen Ende (9) des Führungslineals angebrachten Kontaktrolle (8) bzw. der an dem auslaufseitigen Ende (10) des Führungslineals (4, 5) angebrachten Kontaktrolle (8) angeordnet sind.

7. Vorrichtung (1) nach Anspruch 5 oder 6, **dadurch gekennzeichnet, dass** zumindest einer der beiden Stellantriebe (6) an seiner dem Führungslineal (4, 5) entgegengesetzten Seite mit einem Gestell (13) oder dergleichen durch eine schwenkbare Lagerung (14) verbunden ist, wobei das Führungslineal (4, 5) mit einer senkrecht zur Transportrichtung (7) des Walz- oder Gießerzeugnisses (2) verschieblichen Schubführung (15) gelenkig verbunden ist, vorzugsweise, dass der andere der beiden Stellantriebe (6) mit der Schubführung (15) in Wirkverbindung steht.

8. Vorrichtung (1) nach Anspruch 7, **dadurch gekennzeichnet, dass** entweder die Gelenkverbindung (11) der Schubführung (15) mit dem Führungslineal (4, 5) in dessen mittleren Bereich (4_{M}, 5_{M}) vorgesehen ist, oder dass die Gelenkverbindung (11) der Schubführung (15) mit dem Führungslineal (4, 5) im Bereich von dessen einlaufseitigen oder auslaufseitigen Ende (9, 10) vorgesehen ist und dabei koaxial oder angrenzend zur Achse (12) einer an der gleichen Stelle des Führungslineals angebrachten Kontaktrolle (8) angeordnet ist.

9. Vorrichtung (1) nach einem der Ansprüche 1 bis 8, **dadurch gekennzeichnet, dass** die Stellantriebe (6) mittels eines Druckgebers (17) kraftgesteuert und/oder mittels eines Weggebers (18) weggesteuert ansteuerbar sind.

10. Vorrichtung (1) nach einem der Ansprüche 1 bis 9, **dadurch gekennzeichnet, dass** zumindest eine Sensoreinrichtung (19) vorgesehen ist, mit der eine IstPosition und/oder eine Ist-Form des Walz- oder Gießerzeugnisses (2) auf der Transportstrasse (3) erfassbar ist, wobei die Stellantriebe (6) für die Führungslineale durch eine Steuereinrichtung (20) in Abhängkeit von der detektierten Ist-Position bzw. Ist-Form des Walz- oder Gießerzeugnisses (2) ansteuerbar sind, um eine gewünschte Soll-Position bzw. eine Soll-Form des Walz- oder Gießerzeugnisses (2) bezüglich einer Breite der Transportstrasse (3) einzustellen.

11. Vorrichtung (1) nach einem der Ansprüche 1 bis 10, **dadurch gekennzeichnet, dass** die zumindest eine Kontaktrolle (8) antreibbar ist, vorzugsweise, dass die Kontaktrolle (8) mit einem hydraulischen, pneumatischen oder elektromechanischen Antrieb ausgerüstet ist, weiter vorzugsweise, dass alle Kontaktrollen (8), die an dem ersten Führungslineal (4) und/oder an dem zweiten Führungslineal (5) angebracht sind, antreibbar sind.

12. Vorrichtung (1) nach einem der Ansprüche 1 bis 11, **dadurch gekennzeichnet, dass** eine Länge der Führungslineale (4, 5) in Transportrichtung (7) des Walz- oder Gießerzeugnisses (2) weniger als 10 Meter, vorzugsweise weniger als 6 Meter, weiter vorzugsweise weniger als 4 Meter beträgt.

13. Verfahren zum seitlichen Führen eines Walz- oder Gießerzeugnisses (2) in Form eines Metallbandes, einer Bramme oder dergleichen auf einer Transportstrasse (3) mit einer Seitenführungseinrichtung (10), die ein erstes Führungslineal (4) und ein zweites Führungslineal (5) umfasst, wobei die Führungslineale (4, 5) einander gegenüberliegend beiderseits der Transportstrasse (3) angeordnet und für ein Bewegen in Richtung einer Breite der Transportstrasse (3) mit jeweils zumindest einem Stellantrieb (6) verbunden sind, der senkrecht zur Transportrichtung (7) des Walz- oder Gießerzeugnisses (2) betätigbar sind,
wobei das erste und das zweite Führungslineal (4, 5) in Abhängigkeit einer IstPosition des Walz- oder Gießerzeugnisses (2) auf der Transportstrasse (3) durch die Stellantriebe (6) derart verstellt werden, dass sie unabhängig voneinander jeweils mit ihrer zugehörigen Längsachsen (4_{L}, 5_{L}) bezüglich der Transportrichtung (7) des Walz- oder Gießerzeugnisses (2) in einem vorbestimmten Winkel (α) und/oder in einem unterschiedlichen Abstand zur Transportstraßen-Mitte (3_{M}) positioniert werden,
**dadurch gekennzeichnet,**
**dass** zumindest die einlaufseitigen Enden (9) und die auslaufseitigen Enden (10) der Führungslineale (4, 5) jeweils eine Kontaktrolle (8) aufweisen, wobei die Kontaktrollen (8) durch ein Verstellen der Führungslineale (4, 5) in Richtung einer Breite der Transportstrasse (3) in Kontakt mit einem Seitenrand des Walz- oder Gießerzeugnisses (2) gebracht werden und daran abrollen, um das Walz- oder Gießerzeugnis (2) zu führen und/oder zur Reduktion von dessen Breite zu stauchen, vorzugsweise, dass die Kontaktrollen (8) separat angetrieben werden, um auf das Walz- oder Gießerzeugnis (2) eine zusätzliche Antriebskraft in seiner Transportrichtung (7) auszuüben.

14. Verfahren nach Anspruch 13, **dadurch gekennzeichnet, dass**, bevor das Walz- oder Gießerzeugnisses (2) auf der Transportstrasse (3) die Seitenführungseinrichtung (1) erreicht, die einlaufseitigen Enden (9) der Führungslineale (4, 5) relativ zueinander weiter beabstandet werden als die auslaufseitigen Enden (10) der Führungslineale (4, 5), so dass die Führungslineale (4, 5) mit ihren Längsachsen (4_{L}, 5_{L}) in Transportrichtung (7) des Walz- oder Gießerzeugnisses (2) in Form eines Trichters angeordnet sind.

15. Verfahren nach Anspruch 13 oder 14, **dadurch gekennzeichnet, dass**, nachdem das Walz- oder Gießerzeugnis (2) mit seiner vorderen Stirnseite zumindest die einlaufseitigen Enden (9) der Führungslineale (4, 5) passiert hat, die beiden Führungslineale (4, 5) zueinander parallel positioniert werden.

16. Verfahren nach Anspruch 13, **dadurch gekennzeichnet, dass**, bevor das Walz- oder Gießerzeugnis (2) auf der Transportstrasse (3) die Seitenführungseinrichtung (1) erreicht oder kurz nachdem das Walz- oder Gießerzeugnisses (2) die einlaufseitigen Enden (9) der Führungslineale (4, 5) passiert hat, die auslaufseitigen Enden (10) der Führungslineale (4, 5) relativ zueinander weiter beabstandet werden als die einlaufseitigen Enden (9) der Führungslineale (4, 5), so dass die Führungslineale (4, 5) mit ihren Längsachsen (4_{L}, 5_{L}) entgegen der Transportrichtung (7) des Walz- oder Gießerzeugnisses (2) in Form eines Trichters angeordnet sind.

17. Verfahren nach Anspruch 16, **dadurch gekennzeichnet, dass**, nachdem das Walz- oder Gießerzeugnis (2) mit seiner vorderen Stirnseite die auslaufseitigen Enden (10) der Führungslineale (4, 5) passiert hat, die beiden Führungslineale (4, 5) zueinander parallel positioniert werden.

18. Verfahren nach Anspruch 16 oder 17, **dadurch gekennzeichnet, dass** das erste Führungslineal (4) und/oder das zweite Führungslineal (5) bei dem parallelen Positionieren zueinander entweder in Kontakt mit den Seitenrändern des Walz- oder Gießerzeugnisses (2) gelangt oder in einem vorbestimmten Abstand zum Seitenrand des Walz- oder Gießerzeugnisses (2) angeordnet wird.

19. Verfahren nach einem der Ansprüche 15, 17 oder 18, **dadurch gekennzeichnet, dass** die Führungslineale (4, 5) mit ihrer Längsachse (4_{L}, 5_{L}) jeweils im Wesentlichen parallel zur Transportrichtung (7) des Walz- oder Gießerzeugnisses (2) ausgerichtet werden, oder dass die Führungslineale (4, 5) mit ihrer jeweiligen Längsachse (4_{L}, 5_{L}) bezüglich der Transportrichtung (7) des Walz- oder Gießerzeugnisses (2) jeweils in einem vorbestimmten Winkel (α) ausgerichtet werden, so dass das Walz- oder Gießerzeugnis (2) in eine vorbestimmte Schräglage bezüglich seiner Transportrichtung (7) gebracht wird.

20. Verfahren nach einem der Ansprüche 13 bis 19, **dadurch gekennzeichnet, dass** die Stellantriebe (6) zum Bewegen der Führungslineale (4, 5) mittels einer Steuereinrichtung (20) weggeregelt und/oder kraftgeregelt angesteuert werden, vorzugsweise, dass die Ansteuerung der Stellantriebe (6) durch eine Steuereinrichtung (20) erfolgt.

21. Verfahren nach Anspruch 19 oder 20, **dadurch gekennzeichnet, dass** mittels einer bestimmten Anstellung der Führungslineale (4, 5) auf das Walz- oder Gießerzeugnis (2) ein Moment für ein Verdrehen auf der Transportstrasse (3) und/oder eine Querkraft für ein Verschieben bezüglich einer Transportstrassen-Mitte (3_{M}) und/oder für ein Stauchen zur Reduzierung von dessen Breite ausgeübt wird.

22. Verfahren nach Anspruch 21, **dadurch gekennzeichnet, dass** die Stellantriebe (6) zum Bewegen des ersten und/oder des zweiten Führungslineals (4, 5) derart angesteuert werden, dass bei einem Kontakt der Führungslineale (4, 5) mit dem Walz- oder Gießerzeugnis (2) eine auf dessen Seitenränder ausgeübte Kraft einen vorbestimmten Grenzwert nicht überschreitet.

23. Verfahren nach einem der Ansprüche 20 bis 22, **dadurch gekennzeichnet, dass** die Positionen der Führungslineale (4, 5) durch Weggeber (18) und/oder die Ist-Position des Walz- oder Gießerzeugnisses (2) bezüglich einer Transportstrassen-Mitte (3_{M}) durch zumindest eine Sensoreinrichtung (19) erfasst werden und an die Steuereinrichtung (20) gesendet werden, wobei bei Unterschreiten von vorbestimmten Grenzwerten für diese Positionen in Bezug auf einen seitlichen Randbereich (3_{R}) der Transportstrasse (3) die Stellantriebe (6) durch die Steuereinrichtung (20) derart angesteuert werden, dass die Führungslineale (4, 5) das Gießerzeugnis (2) in Richtung der Transportstrassen-Mitte (3_{M}) zurückführen bzw. verschieben.

24. Verfahren nach einem der Ansprüche 14 bis 23, **dadurch gekennzeichnet, dass** die Position der Führungslineale (4, 5) bezüglich der Transportstrasse (3) fortwährend überwacht wird, wobei auf Grundlage dieser Positionsdaten ein nachfolgender Transportverlauf des Walz- oder Gießerzeugnisses (2) bezüglich einer Breite der Transportstrasse (3) stromabwärts der Seitenführungseinrichtung (1) bestimmt wird.

25. Verfahren nach einem der Ansprüche 13 bis 24, **dadurch gekennzeichnet, dass** zumindest eine Messeinrichtung (19) vorgesehen ist, mittels der eine IstPosition bzw. Ist-Form des Walz- oder Gießerzeugnisses (2) auf der Transportstrasse (3) bestimmt wird, wobei die zumindest eine Messeinrichtung (19) insbesondere als Abstandsmesser ausgebildet und derart eingerichtet ist, dass damit die Seitenränder des Walz- oder Gießerzeugnisses (2) über eine Länge des Gießerzeugnisses (2) relativ zu einer Bezugsebene oder relativ zu einem Bezugspunkt erfasst werden, so dass das Walz- oder Gießerzeugnisses (2) vollständig auf der Transportstrasse (3) geortet wird und auf Grundlage dessen die Stellantriebe (6) für die Führungslineale (4, 5) derart angesteuert werden, um eine gewünschte Soll-Position bzw. Soll-Form des Walz- oder Gießerzeugnisses (2) bezüglich einer Breite der Transportstrasse (3) auszurichten.

26. Verfahren nach einem der Ansprüche 13 bis 25, das mit einer Vorrichtung (1) nach einem der Ansprüche 1 bis 12 durchgeführt wird.

## Claims

1. Device (1) for laterally guiding a rolled or cast product (2) in the form of a metal strip, a slab or the like on a transport track (3), comprising
a first guide (4) and a second guide (5), wherein the guides (4, 5) are arranged opposite one another on either side of the transport track (3) and are each connected, for movement in the direction of the width of the transport track (3), with at least one setting drive (6) actuable perpendicularly to the transport direction (7) of the rolled or cast product (2),
wherein the first guide (4) and/or the second guide (5) can be so positioned by actuation of the respectively associated setting drive that they can be positioned independently of one another with the respective longitudinal axes (4_{L}, 5_{L}) thereof at a predetermined angle (α) relative to the transport direction (7) of the rolled or cast product (2) and/or at a different spacing from the transport track centre (3_{M}), and
wherein the first guide (4) and/or the second guide (5) has or have at least one contact roller (8) which can be brought into contact with a lateral edge of the rolled or cast product (2) by movement of the corresponding guide (4, 5) in order to guide the rolled or cast product (2) and/or to reduce the width thereof by upsetting,
**characterised in that** the first and/or the second guide (4, 5) has or have two respective contact rollers (8) respectively mounted at the inlet-side end (9) and the outlet-side end (10) of the corresponding guide (4, 5).

2. Device (1) according to claim 1, **characterised in that** a contact roller (8) is mounted on the first and/or the second guide (4, 5) at the inlet-side end (9) thereof and/or is mounted in a centre region (4_{M}, 5_{M}) thereof.

3. Device (1) according to claim 1 or 2, **characterised in that** the first guide (4) and/or the second guide (5) is or are connected via a pivot connection (11) with the respectively associated setting drive (6).

4. Device (1) according to claim 3, **characterised in that** a setting motor or the like for rotational movement of the guide (4, 5) is provided in the region of the pivot connection (11) so that the guide (4, 5) can be positioned by the longitudinal axis (4_{L}, 5_{L}) thereof at the predetermined angle (α) relative to the transport direction (7) of the rolled or cast product (2).

5. Device (1) according to any one of claims 1 to 5, **characterised in that**, for the first guide (4) and/or for the second guide (5), two setting drives (6) are provided in each case, which are pivotably connected (11) with the corresponding guide (4, 5), are arranged at a mutual spacing and can be activated independently of one another, preferably **in that** the pivot connection (11) of at least one of these setting drives (6) is arranged coaxially with the guide (4, 5) or adjacent to the axis (12) of a contact roller (8) mounted on the guide (4, 5).

6. Device (1) according to claim 5, **characterised in that** each of the pivot connections (11) of the two setting drives (6) is arranged coaxially with the guide or adjacent to the axis (12) of the contact roller (8) mounted at the inlet-side end (9) of the guide or the contact roller (8) mounted at the outlet-side end (10) of the guide (4, 5).

7. Device (1) according to claim 5 or 6, **characterised in that** at least one of the two actuating drives (6) is connected on its side opposite the guide (4, 5) with a frame (13) or the like via a pivotable bearing (14), wherein the guide (4, 5) is pivotably connected with a sliding guide (15) displaceable perpendicularly to the transport direction (7) of the rolled or cast product (2), preferably such that the other one of the two setting drives (6) is operatively connected with the sliding guide (15).

8. Device (1) according to claim 7, **characterised in that** either the pivot connection (11) of the sliding guide (15) with the guide (4, 5) is provided in the centre region (4_{M}, 5_{M}) thereof or the pivot connection (11) of the sliding guide (15) with the guide (4, 5) is provided in the region of the inlet-side end or outlet-side end (9, 10) thereof and **in that** case is arranged coaxially with or adjacent to the axis (12) of a contact roller (8) mounted at the same point on the guide.

9. Device (1) according to any one of claims 1 to 8, **characterised in that** the setting drives (6) can be activated in a force-controlled manner by means of a pressure transducer (17) and/or in a travel-controlled manner by means of a travel transducer (18).

10. Device (1) according to any one of claims 1 to 9, **characterised in that** at least one sensor device (19) by which an actual position and/or an actual form of the rolled or cast product (2) on the transport track (3) is detectable is provided, wherein the setting drives (6) for the guides are activatable by a control device (20) in dependence on the detected actual position or actual form of the rolled or cast product (2) so as to set a desired target position or a target form of the rolled or cast product (2) relative to the width of the transport track (3).

11. Device (1) according to any one of claims 1 to 10, **characterised in that** the at least one contact roller (8) is drivable, preferably **in that** the contact roller (8) is equipped with a hydraulic, pneumatic or electromechanical drive, and preferably **in that** all the contact rollers (8) mounted on the first guide (4) and/or on the second guide (5) are drivable.

12. Device (1) according to any one of claims 1 to 11, **characterised in that** the length of the guides (4, 5) in the transport direction (7) of the rolled or cast product (2) is less than 10 metres, preferably less than 6 metres, more preferably less than 4 metres.

13. Method for laterally guiding a rolled or cast product (2) in the form of a metal strip, a slab or the like on a transport track (3) with a lateral guide device (10), which comprises a first guide (4) and a second guide (5), wherein the guides (4, 5) are arranged opposite one another on either side of the transport track (3) and are each connected with at least one setting drive (6) for movement in the direction of the width of the transport track (3), which drive is actuable perpendicularly to the transport direction 97) of the rolled or cast product (2),
wherein the first and the second guides (4, 5) are so adjusted by the setting drives (6) in dependence on an actual position of the rolled or cast product (2) on the transport track (3) that they can be positioned independently of one another with the associated longitudinal axes (4_{L}, 5_{L}) thereof at a predetermined angle (α) relative to the transport direction (7) of the rolled or cast product (2) and/or at a different spacing from the transport track centre (3_{M}),
**characterised in that** at least the inlet-side ends (9) and the outlet-side ends (10) of the guides (4, 5) each have a contact roller (8), wherein the contact rollers (8) are placed in contact with and roll along a lateral edge of the rolled or cast product (2) by adjustment of the guides (4, 5) in the direction of the width of the transport track (3) so as to guide the rolled or cast product (2) and/or to reduce its width by upsetting, preferably **in that** the contact rollers (8) are separately driven in order to exert an additional driving force on the rolled or cast product (2) in the transport direction (7) thereof.

14. Method according to claim 13, **characterised in that** before the rolled or cast product (2) reaches the lateral guide device (1) on the transport track (3) the inlet-side ends (9) of the guides (4, 5) are spaced further from one another than the outlet-side ends (10) of the guides (4, 5) so that the guides (4, 5) are arranged by the longitudinal axes (4_{L}, 5_{L}) thereof in the form of a funnel in the transport direction (7) of the rolled or cast product (2).

15. Method according to claim 13 or 14, **characterised in that** after the leading end of the rolled or cast product (2) has passed at least the inlet-side ends (9) of the guides (4, 5) the two guides (4, 5) are positioned parallel to one another.

16. Method according to claim 13, **characterised in that** before the rolled or cast product (2) on the transport track (3) reaches the lateral guide device (1) or shortly after the rolled or cast product (2) has passed the inlet-side ends (9) of the guides (4, 5) the outlet-side ends (10) of the guides (4, 5) are spaced further from one another than the inlet-side ends (9) of the guides (4, 5) so that the guides (4, 5) are arranged by the longitudinal axes (4_{L}, 5_{L}) thereof in the form of a funnel opposite the transport direction (7) of the rolled or cast product (2).

17. Method according to claim 16, **characterised in that** after the leading end face of the rolled or cast product (2) has passed the outlet-side ends (10) of the guides (4, 5) the two guides (4, 5) are positioned parallel to one another.

18. Method according to claim 16 or 17, **characterised in that** when the first guide (4) and/or the second guide (5) is or are being positioned parallel to one another it or they either comes or come into contact with the lateral edges of the rolled or cast product (2) or is or are arranged at a predetermined distance from the lateral edge of the rolled or cast product (2).

19. Method according to any one of claims 15, 17 and 18, **characterised in that** the guides (4, 5) are each aligned by the longitudinal axes (4_{L}, 5_{L}) thereof substantially parallel to the transport direction (7) of the rolled or cast product (2) or **in that** the guides (4, 5) are each aligned by the respective longitudinal axes (4_{L}, 5_{L}) thereof at a predetermined angle (α) relative to the transport direction (7) of the rolled or cast product (2) so that the rolled or cast product (2) is brought into a predetermined angled position relative to the transport direction (7) thereof.

20. Method according to any one of claims 3 to 19, **characterised in that** the setting drives (6) for moving the guides (4, 5) are activated by means of a control device (20) in a travel-controlled and/or force-controlled manner, preferably **in that** the setting drives (6) are activated by a control device (20).

21. Method according to claim 19 or 20, **characterised in that** by means of a defined engagement of the guides (4, 5) with the rolled or cast product (2) a torque for rotation thereof on the transport track (3) and/or a transverse force for displacement thereof relative to the transport track centre (3_{M}) and/or for upsetting in order to reduce the width thereof is exerted.

22. Method according to claim 21, **characterised in that** the setting drives (6) are activated for moving the first and/or the second guide (4, 5) in such a way that in the case of contact of the guides (4, 5) with the rolled or cast product (2) a force exerted on the lateral edges thereof does not exceed a preset limit value.

23. Method according to any one of claims 20 to 22, **characterised in that** the positions of the guides (4, 5) are detected by travel transducers (18) and/or the actual position of the rolled or cast product (2) relative to a transport track centre (3_{M}) is detected by at least one sensor device (19) and this position or these positions is or are transmitted to the control device (20), wherein if this position falls or these positions fall below predetermined limit values therefor in relation to a lateral edge region (3_{R}) of the transport track (3) the setting drives (6) are so activated by the control device (20) that the guides (4, 5) return and/or displace the cast product (2) in the direction of the transport track centre (3_{M}).

24. Method according to any one of claims 14 to 23, **characterised in that** the position of the guides (4, 5) relative to the transport track (3) is constantly monitored, wherein on the basis of these position data a subsequent transport path of the rolled or cast product (2) relative to the width of the transport track (3) downstream of the lateral guide device (1) is determined.

25. Method according to any one of claims 13 to 24, **characterised in that** at least one measuring device (19) is provided, by means of which an actual position or actual form of the rolled or cast product (2) on the transport track (3) is determined, wherein the at least one measuring device (19) is constructed as, in particular, a distance meter and is so arranged that the lateral edges of the rolled or cast product 92) are detected over a length of the cast product (2) relative to a reference plane or relative to a reference point so that the position of the rolled or cast product (2) on the transport track (3) is fully determined and on the basis thereof the setting drives (6) for the guides (4, 5) are activated so as to align a desired target position or target form of the rolled or cast product (2) relative to a width of the transport track (3).

26. Method according to any one of claims 13 to 25, which is carried out using a device (1) according to any one of claims 1 to 12.

## Revendications

1. Dispositif (1) pour le guidage latéral d'un produit de laminage ou de coulée (2) sous la forme d'une bande métallique, d'une brame ou analogue sur une voie de transport (3) comprenant :
une première règle de guidage (4) et une deuxième règle de guidage (5), les règles de guidage (4, 5) étant disposées l'une face à l'autre des deux côtés de la voie de transport (3) et étant reliées, à des fins de déplacement dans la direction de la largeur de la voie de transport (3), a respectivement au moins un mécanisme de réglage (6), qui peut être activé en direction verticale par rapport à la direction de transport (7) du produit de laminage ou de coulée (2),
dans lequel la première règle de guidage (4) et/ou la deuxième règle de guidage (5) peuvent être agencées, via une activation du mécanisme de réglage qui leur est respectivement attribué, d'une manière telle qu'elles peuvent venir se positionner respectivement, indépendamment l'une de l'autre, de telle façon que leur axe longitudinal correspondant (4_{L}, 5_{L}) forme un angle prédéterminé (α) par rapport à la direction de transport (7) du produit de laminage ou de coulée (2) et/ou à une distance différente par rapport au milieu de la voie de transport (3_{M}) ;
dans lequel la première règle de guidage (4) et/ou la deuxième règle de guidage (5) présentent au moins un rouleau de contact (8) qui peut être amené, via un mouvement de la règle de guidage correspondante (4, 5) en contact avec un bord latéral du produit de laminage ou de coulée (2) pour guider le produit de laminage ou de coulée (2) et/ou pour l'écraser afin d'obtenir une réduction de la largeur de ce dernier ;
**caractérisé en ce que** la première et/ou la deuxième règles de guidage (4, 5) présentent respectivement deux rouleaux de contact (8), les rouleaux de contact (8) étant appliqués respectivement à l'extrémité côté entrée (9) et à l'extrémité côté sortie (10) de la règle de guidage correspondante (4, 5).

2. Dispositif (1) selon la revendication 1, **caractérisé en ce qu'**un rouleau de contact (8) est appliqué contre la première et/ou contre la deuxième règle de guidage (4, 5) à l'extrémité côté entrée (9) et/ou dans une zone médiane (4_{M}, 5_{M}) desdites règles.

3. Dispositif (1) selon la revendication 1 ou 2, **caractérisé en ce que** la première règle de guidage (4) et/ou la deuxième règle de guidage (5) sont reliées, via une liaison articulée (11) au mécanisme de réglage (6) qui leur est respectivement attribué.

4. Dispositif (1) selon la revendication 3, **caractérisé en ce que**, dans la zone de la liaison articulée (11), on prévoit un moteur de commande ou analogue pour un mouvement rotatif de la règle de guidage (4, 5), d'une manière telle que la règle de guidage (4, 5) peut venir se disposer de telle façon que son axe longitudinal (4_{L}, 5_{L}) forme l'angle prédéterminé (α) par rapport à la direction de transport (7) du produit de laminage ou de coulée (2).

5. Dispositif (1) selon l'une quelconque des revendications 1 à 4, **caractérisé en ce qu'**on prévoit, pour la première règle de guidage (4) et/ou pour la deuxième règle de guidage (5), respectivement deux mécanismes de réglage (6) qui sont reliés en articulation (11) à la règle de guidage correspondante (4, 5), qui sont disposés à l'écart l'un de l'autre et qui peuvent être activés indépendamment l'un de l'autre, de préférence **en ce que** la liaison articulée (11) d'au moins un de ces mécanismes de réglage (6) avec la règle de guidage (4, 5) est disposé en position coaxiale ou en position adjacente par rapport à l'axe (12) d'un rouleau de contact (8) appliqué contre la règle de guidage (4, 5).

6. Dispositif (1) selon la revendication 5, **caractérisé en ce que** les liaisons articulées (11) des deux mécanismes de réglage (6) avec la règle de guidage sont disposées respectivement en position coaxiale ou en position adjacente par rapport à l'axe (12) du rouleau de contact (8) appliqué à l'extrémité côté entrée (9) de la règle de guidage, respectivement du rouleau de contact (8) appliqué à l'extrémité côté sortie (10) de la règle de guidage (4, 5).

7. Dispositif (1) selon la revendication 5 ou 6, **caractérisé en ce qu'**au moins un des deux mécanismes de réglage (6) est relié, à son côté opposé à la règle de guidage (4, 5), à un bâti (13) ou analogue via un logement de palier pivotant (14), la règle de guidage (4, 5) étant reliée en articulation à un guidage par poussée (15) apte à se déplacer perpendiculairement à la direction de transport (7) du produit de laminage ou de coulée (2), de préférence **en ce que** l'autre mécanisme de réglage parmi les deux mécanismes de réglage (6) est relié de manière active au guidage par poussée (15).

8. Dispositif (1) selon la revendication 7, **caractérisé en ce que**, soit la liaison articulée (11) du guidage par poussée (15) avec la règle de guidage (4, 5) est prévue dans la zone médiane de cette dernière (4_{M}, 5_{M}), soit la liaison articulée (11) du guidage par poussée (15) avec la règle de guidage (4, 5) est prévue dans la zone de l'extrémité côté entrée ou côté sortie (9, 10) de cette dernière, et est disposée en l'occurrence en position coaxiale ou en position adjacente par rapport à l'axe (12) d'un rouleau de contact (8) appliqué au même endroit de la règle de guidage.

9. Dispositif (1) selon l'une quelconque des revendications 1 à 8, **caractérisé en ce que** les mécanismes de réglage (6) peuvent être commandés via une commande asservie en effort au moyen d'un transmetteur de pression (17) et/ou via une commande à course contrôlée au moyen d'un capteur de déplacement (18).

10. Dispositif (1) selon l'une quelconque des revendications 1 à 9, **caractérisé en ce qu'**on prévoit au moins un mécanisme de détection (19) avec lequel on peut enregistrer une position réelle et/ou une configuration réelle du produit de laminage ou de coulée (2)sur la voie de transport (3), les mécanismes de réglage (6) pour les règles de guidage pouvant être activés via un dispositif de commande (20) en fonction de la position réelle, respectivement de la configuration réelle détectée du produit de laminage ou de coulée (2), afin de régler une position de consigne, respectivement une configuration de consigne désirée du produit de laminage ou de coulée (2) par rapport à la largeur de la voie de transport (3).

11. Dispositif (1) selon l'une quelconque des revendications 1 à 10, **caractérisé en ce que** ledit au moins rouleau de contact (8) peut être activé, de préférence **en ce que** le rouleau de contact (8) est équipé d'une commande hydraulique, pneumatique ou électromécanique, de manière plus préférée, **en ce que** tous les rouleaux de contact (8) qui sont appliqués contre la première règle de guidage (4) et/ou contre la deuxième règle de guidage (5) peuvent être activés.

12. Dispositif (1) selon l'une quelconque des revendications 1 à 11, **caractérisé en ce qu'**une longueur des règles de guidage (4, 5) dans la direction de transport (7) du produit de laminage ou de coulée (2) est inférieure à 10 m, de préférence inférieure à 6 m, de manière plus préférée inférieure à 4 m.

13. Procédé pour le guidage latéral d'un produit de laminage ou de coulée (2) sous la forme d'une bande métallique, d'une brame ou analogue sur une voie de transport (3) avec un mécanisme de guidage latéral (10) qui comprend une première règle de guidage (4) et une deuxième règle de guidage (5), les règles de guidage (4, 5) étant disposées l'une face à l'autre des deux côtés de la voie de transport (3) et étant reliées, à des fins de déplacement dans la direction de la largeur de la voie de transport (3), a respectivement au moins un mécanisme de réglage (6), qui peuvent être activées en direction verticale par rapport à la direction de transport (7) du produit de laminage ou de coulée (2),
dans lequel la première et la deuxième règle de guidage (4, 5) peuvent être déplacées via le mécanisme de réglage, en fonction d'une position réelle du produit de laminage ou de coulée (2) sur la voie de transport (3) d'une manière telle qu'elles viennent se positionner, indépendamment l'une de l'autre respectivement, de telle façon que leurs axes longitudinaux correspondants (4_{L}, 5_{L}) forment un angle prédéterminé (α) par rapport à la direction de transport (7) du produit de laminage ou de coulée (2) et/ou à une distance différente par rapport au milieu de la voie de transport (3_{M}) ;
**caractérisé en ce que** au moins les extrémités côté entrée (9) et les extrémités côté sortie (10) des règles de guidage (4, 5) présentent respectivement un rouleau de contact (8), les rouleaux de contact (8), via un déplacement des règles de guidage (4, 5) dans la direction de la largeur de la voie de transport (3) sont mis en contact avec un bord latéral du produit de laminage ou de coulée (2) et roulent le long du bord en question, dans le but de guider le produit de laminage ou de coulée (2) et/ou pour pouvoir l'écraser afin d'obtenir une réduction de sa largeur, de préférence **en ce que** les rouleaux de contact (8) sont entraînés de manière séparée pour exercer, sur le produit de laminage ou de coulée (2), une force d'entraînement supplémentaire dans sa direction de transport (7).

14. Procédé selon la revendication 13, **caractérisé en ce que**, avant que le produit de laminage ou de coulée (2) sur la voie de transport (3) n'atteigne le mécanisme de guidage latéral (1), les extrémités côté entrée (9) des règles de guidage (4, 5) sont plus écartées l'une de l'autre que les extrémités côté sortie (10) des règles de guidage (4, 5) d'une manière telle que les règles de guidage (4, 5) sont disposées de telle façon que leurs axes longitudinaux (4_{L}, 5_{L}) prennent la forme d'un entonnoir dans la direction de transport (7) du produit de laminage ou de coulée (2).

15. Procédé selon la revendication 13 ou 14, **caractérisé en ce que**, après que le produit de laminage ou de coulée (2) a dépassé avec son côté frontal avant au moins les extrémités côté entrée (9) des règles de guidage (4, 5), les deux règles de guidage (4, 5) sont disposées en une configuration réciproquement parallèle.

16. Procédé selon la revendication 13, **caractérisé en ce que**, avant que le produit de laminage ou de coulée (2) sur la voie de transport (3) n'atteigne le mécanisme de guidage latéral (1) ou peu de temps après que le produit de laminage ou de coulée (2) a dépassé les extrémités côté entrée (9) des règles de guidage (4, 5), les extrémités côté sortie (10) des règles de guidage (4, 5) sont plus écartées l'une de l'autre que les extrémités côté entrée (9) des règles de guidage (4, 5), d'une manière telle que les règles de guidage (4, 5) sont disposées de telle façon que leurs axes longitudinaux (4_{L}, 5_{L}) prennent la forme d'un entonnoir dans une direction opposée à la direction de transport (7) du produit de laminage ou de coulée (2).

17. Procédé selon la revendication 16, **caractérisé en ce que**, après que le produit de laminage ou de coulée (2) a dépassé avec son côté frontal avant les extrémités côté sortie (10) des règles de guidage (4, 5), les deux règles de guidage (4, 5) sont disposées en une configuration réciproquement parallèle.

18. Procédé selon la revendication 16 ou 17, **caractérisé en ce que** la première règle de guidage (4) et/ou la deuxième règle de guidage (5), lors de leur positionnement réciproquement parallèle, soit entrent en contact avec les bords latéraux du produit de laminage ou de coulée (2), soit sont disposées à une distance prédéterminée par rapport au bord latéral du produit de laminage ou de coulée (2).

19. Procédé selon l'une quelconque des revendications 15, 17 ou 18, **caractérisé en ce que** les règles de guidage (4, 5) sont orientées avec leurs axes longitudinaux (4_{L}, 5_{L}) respectivement essentiellement parallèlement à la direction de transport (7) du produit de laminage ou de coulée (2), ou **en ce que** les règles de guidage (4, 5) sont orientées avec leurs axes longitudinaux respectifs (4_{L}, 5_{L}) en formant, par rapport à la direction de transport (7) du produit de laminage ou de coulée (2), un angle prédéterminé (α), d'une manière telle que l'on amène le produit de laminage ou de coulée (2) dans une position inclinée prédéterminée par rapport à sa direction de transport (7).

20. Procédé selon l'une quelconque des revendications 13 à 19, **caractérisé en ce que** les mécanismes de réglage (6) pour le déplacement des règles de guidage (4, 5) sont activés via une commande asservie en effort et/ou via une commande à course contrôlée au moyen d'un mécanisme de commande (20), de préférence **en ce que** l'activation des mécanismes de réglage (6) a lieu via un mécanisme de commande (20).

21. Procédé selon la revendication 19 ou 20, **caractérisé en ce que**, au moyen d'un positionnement déterminé de la règle de guidage (4, 5) sur le produit de laminage ou de coulée (2), on exerce un couple pour une déformation sur la voie de transport (3) et/ou une force transversale pour un déplacement par rapport à un milieu (3_{M}) de la voie de transport et/ou pour un écrasement dans le but de réduire sa largeur.

22. Procédé selon la revendication 21, **caractérisé en ce que** les mécanismes de réglage (6) pour le déplacement de la première et/ou de la deuxième règle de guidage (4, 5) sont activés d'une manière telle que, lors d'une mise en contact des règles de guidage (4, 5) avec le produit de laminage ou de coulée (2), une force qui s'exerce sur les bords latéraux de ce dernier ne dépasse pas une valeur limite prédéterminée.

23. Procédé selon l'une quelconque des revendications 20 à 22, **caractérisé en ce qu'**on enregistre les positions des règles de guidage (4, 5) via des capteurs de déplacement (18) et/ou on enregistre la position réelle du produit de laminage ou de coulée (2) par rapport à un milieu (3_{M}) de la voie de transport en utilisant au moins un mécanisme de détection (19) et on envoie lesdites positions au mécanisme de commande (20), dans lequel, dans le cas d'un dépassement vers le bas de valeurs limites prédéterminées pour ces positions par rapport à une zone marginale latérale (3_{R}) de la voie de transport (3), on active les mécanismes de réglage (6) via le mécanisme de commande (20) d'une manière telle que les règles de guidage (4, 5) ramènent, respectivement déplacent le produit de coulée (2) dans la direction du milieu (3_{M}) de la voie de transport.

24. Procédé selon l'une quelconque des revendications 14 à 22, **caractérisé en ce qu'**on surveille en continu la position des règles de guidage (4, 5) par rapport à la voie de transport (3), une allure de transport ultérieure du produit de laminage ou de coulée (2) par rapport à la largeur de la voie de transport (3) en aval du mécanisme de guidage latéral (1) étant déterminée sur base de ces données de position.

25. Procédé selon l'une quelconque des revendications 13 à 24, **caractérisé en ce qu'**on prévoit au moins un mécanisme de mesure (19), au moyen duquel on détermine une position réelle, respectivement une configuration réelle du produit de laminage ou de coulée (2) sur la voie de transport (3), ledit au moins un mécanisme de mesure (19) étant réalisé en particulier sous la forme d'un dispositif de mesure de la distance et étant conçu d'une manière telle que l'on peut ainsi enregistrer les bords latéraux du produit de laminage ou de coulée (2) sur une longueur du produit de coulée (2) par rapport à un plan de référence ou par rapport à un point de référence, de telle sorte que le produit de laminage ou de coulée (2) est toujours localisé sur la voie de transport (3) et, sur base de cette caractéristique, les mécanismes de réglage (6) pour les règles de guidage (4, 5) sont activés de façon à amener dans une position de consigne désirée, respectivement dans une configuration de consigne désirée le produit de laminage ou de coulée (2) par rapport à la largeur de la voie de transport (3).

26. Procédé selon l'une quelconque des revendications 13 à 25, qui est mis en oeuvre avec un dispositif (1) selon l'une quelconque des revendications 1 à 12.
